(19) Europäisches Patentamt
European Patent Office
Office européen des brevets

(11) EP 0 776 947 B1

(12) **EUROPÄISCHE PATENTSCHRIFT**

(45) Veröffentlichungstag und Bekanntmachung des Hinweises auf die Patenterteilung:
**26.04.2000 Patentblatt 2000/17**

(51) Int Cl.[7]: **C09B 62/503**, C09B 62/04, C09B 62/002

(21) Anmeldenummer: **96810742.5**

(22) Anmeldetag: **07.11.1996**

(54) **Faserreaktive Farbstoffe, ihre Herstellung und Verwendung**

Fiber-reactive dyestuffs, their preparation and use

Colorants réactifs sur la fibre, leur préparation et leur utilisation

(84) Benannte Vertragsstaaten:
**BE CH DE ES FR GB IT LI PT**

(30) Priorität: **16.11.1995 CH 325395**

(43) Veröffentlichungstag der Anmeldung:
**04.06.1997 Patentblatt 1997/23**

(73) Patentinhaber: **Ciba Specialty Chemicals Holding Inc.**
**4057 Basel (CH)**

(72) Erfinder:
- **Reichert, Hans**
**79618 Rheinfelden (DE)**
- **Klier, Herbert**
**79588 Efringen-Kirchen (DE)**

(56) Entgegenhaltungen:
**EP-A- 0 478 503**
**EP-A- 0 625 549**
**GB-A- 2 008 145**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 776 947 B1

Printed by Jouve, 75001 PARIS (FR)

## Beschreibung

Die vorliegende Erfindung betrifft neue Reaktivfarbstoffe, Verfahren zu ihrer Herstellung und ihre Verwendung zum Färben oder Bedrucken von textilen Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben werden heute Reaktivfarbstoffe gefordert, die eine ausreichende Substantivität haben und die zugleich eine gute Auswaschbarkeit der nicht fixierten Anteile aufweisen. Sie sollen ferner eine gute färberische Ausbeute aufweisen und hohe Reaktivität besitzen, wobei insbesondere Färbungen mit hohen Fixiergraden geliefert werden sollen. Von den bekannten Farbstoffen werden diese Anforderungen nicht in allen Eigenschaften erfüllt.

Der vorliegenden Erfindung liegt daher die Aufgabe zugrunde, neue, verbesserte Reaktivfarbstoffe für das Färben und Bedrucken von Fasermaterialien zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen reaktiven Farbstoffen die gestellte Aufgabe weitgehend gelöst wird.

Gegenstand der vorliegenden Erfindung sind daher Verbindungen der Formel

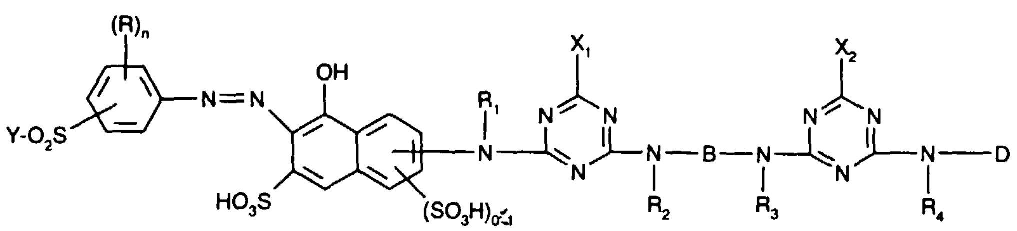

(1),

worin

B 1,2-Propylen, 1,3-Propylen, 2-Hydroxy-1,3-propylen, 1,4-Butylen, 2-Methyl-1,5-pentylen oder 1,6-Hexylen ist,
D den Rest eines Monoazo-, Polyazo-, Metallkomplexazo-, Anthrachinon-, Phthalocyanin-, Formazan- oder Dioxazin-Chromophors bedeutet,
$(R)_n$ für n gleiche oder verschiedene Reste aus der Gruppe $C_1$-$C_4$-Alkyl, $C_1$-$C_4$-Alkoxy, Halogen und Sulfo steht,
n die Zahl 0, 1 oder 2 ist,
$R_1$, $R_2$, $R_3$ und $R_4$ unabhängig voneinander je Wasserstoff oder gegebenenfalls substituiertes $C_1$-$C_4$-Alkyl bedeuten,
einer der Reste $X_1$ und $X_2$ für Chlor und der andere für Fluor steht,
Y Vinyl oder einen Rest $-CH_2-CH_2-U$ bedeutet und
U eine Abgangsgruppe ist.

Die erfindungsgemässen Farbstoffe der Formel (1) unterscheiden sich dadurch von den in der EP-A-625,549 und der GB-A-2,008,145 offenbarten Farbstoffen, dass die Reste $X_1$ und $X_2$ unterschiedliche Bedeutungen haben.

Die Verbindungen der Formel (1) enthalten mindestens eine, vorzugsweise mindestens zwei und besonders bevorzugt 2 bis 8 Sulfogruppen, welche jeweils entweder in Form ihrer freien Säure oder vorzugsweise als deren Salze vorliegen. Als Salze kommen beispielsweise die Alkali-, Erdalkali- oder Ammoniumsalze, Salze eines organischen Amins oder Mischungen davon in Betracht. Als Beispiele seien Natrium-, Lithium-, Kalium- oder Ammoniumsalze, das Salz des Mono-, Di- oder Triethanolamins oder Na/Li- oder Na/Li/$NH_4$-Mischsalze genannt.

Bei B handelt es sich um 1,3-Propylen, 2-Hydroxy-1,3-propylen, 1,4-Butylen, 2-Methyl-1,5-pentylen, 1,6-Hexylen und besonders 1,2-Propylen.

Bedeuten $R_1$, $R_2$, $R_3$ oder $R_4$ gegebenenfalls substituiertes $C_1$-$C_4$-Alkyl, kann es sich z.B. um unsubstituiertes oder z.B. durch Hydroxy, Sulfo, Sulfato, Carboxy, Cyano, Halogen, $C_1$-$C_4$-Alkoxycarbonyl oder Carbamoyl substituiertes Methyl, Ethyl, n- oder iso-Propyl oder n-, sec.-, tert.- oder iso-Butyl handeln.

$R_1$, $R_2$, $R_3$ oder $R_4$ stehen unabhängig voneinander je bevorzugt für Wasserstoff oder $C_1$-$C_4$-Alkyl, besonders

bevorzugt für Wasserstoff, Methyl oder Ethyl und insbesondere bevorzugt für Wasserstoff.

R bedeutet bevorzugt Methyl, Methoxy, Chlor oder Sulfo und besonders bevorzugt Sulfo.

n bedeutet bevorzugt die Zahl 0 oder 1 und besonders bevorzugt die Zahl 0.

$(R)_n$ steht bevorzugt für 0, 1 oder 2 gleiche oder verschiedene Reste R aus der Gruppe Methyl, Methoxy, Chlor und Sulfo und besonders bevorzugt für 0 oder 1 Rest aus der Gruppe Methyl, Methoxy, Chlor und Sulfo.

$X_1$ bedeutet bevorzugt Chlor und $X_2$ bevorzugt Fluor.

Bedeutet Y einen Rest $-CH_2-CH_2-U$, so kann es sich bei der Abgangsgruppe U z.B. um -Cl,-Br, -F, $-OSO_3H$, $-SSO_3H$, $-OCO-CH_3$, $OPO_3H_2$, $-OCO-C_6H_5$, $OSO_2-C_1-C_4$-Alkyl oder $-OSO_2-N(C_1-C_4\text{-Alkyl})_2$ handeln. Bevorzugt ist U eine Gruppe der Formel -Cl, $-OSO_3H$, $-SSO_3H$, $-OCO-CH_3$, $-OCO-C_6H_5$ oder $-OPO_3H_2$, insbesondere -Cl oder $-OSO_3H$ und besonders bevorzugt $-OSO_3H$.

Y bedeutet bevorzugt Vinyl, β-Chlorethyl, β-Sulfatoethyl, β-Thiosulfatoethyl, β-Acetoxyethyl, β-Phenoxyethyl oder β-Phosphatoethyl und besonders bevorzugt β-Sulfatoethyl oder Vinyl.

D steht bevorzugt für den Rest eines Monoazo-, Disazo-, Anthrachinon-, Formazan-, Phthalocyanin- oder Dioxazin-Chromophors und besonders bevorzugt für den Rest eines Monoazo-, Disazo- oder Formazan-Chromophors.

Der Rest D kann an seinem Grundgerüst farbstoffübliche Substituenten aufweisen. Als solche Substituenten seien beispielhaft genannt: $C_1-C_{12}$-Alkyl, insbesondere $C_1-C_4$-Alkyl, womit generell Methyl, Ethyl, n- oder iso-Propyl, oder n-, iso-, sec.- oder tert.-Butyl umfasst ist, $C_1-C_8$-Alkoxy, insbesondere $C_1-C_4$-Alkoxy, worunter generell Methoxy, Ethoxy, n- oder iso-Propoxy, oder n-, iso-, sec.- oder tert.-Butoxy zu verstehen ist, im Alkylteil z.B. durch Hydroxy, $C_1-C_4$-Alkoxy oder Sulfato substituiertes $C_1-C_4$-Alkoxy wie z.B. 2-Hydroxyethoxy, 3-Hydroxypropoxy, 2-Sulfatoethoxy, 2-Methoxyethoxy oder 2-Ethoxyethoxy, Acylaminogruppen mit 2 bis 8 Kohlenstoffatomen, insbesondere $C_2-C_4$-Alkanoylaminogruppen wie Acetylamino oder Propionylamino, Benzoylamino oder $C_2-C_4$-Alkoxycarbonylaminogruppen wie Methoxycarbonylamino oder Ethoxycarbonylamino, Amino, gegebenenfalls im Alkylteil z.B. durch Hydroxy, Sulfo, Sulfato oder $C_1-C_4$-Alkoxy substituiertes N-Mono- oder N,N-Di-$C_1-C_4$-Alkylamino, z.B. Methylamino, Ethylamino, N, N-Dimethyl- oder N,N-Diethylamino, Sulfomethylamino, β-Hydroxyethylamino, N,N-Di-(β-hydroxyethylamino), N-β-Sulfatoethylamino, gegebenenfalls im Phenylteil durch Methyl, Methoxy, Halogen oder Sulfo substituiertes Phenylamino, gegebenenfalls im Alkylteil durch Hydroxy, Sulfo oder Sulfato oder im Phenylteil gegebenenfalls durch Methyl, Methoxy, Halogen oder Sulfo substituiertes N-$C_1-C_4$-Alkyl-N-phenylamino, z.B. N-Methyl-N-phenylamino, N-Ethyl-N-phenylamino, N-β-Hydroxyethyl-N-phenylamino oder N-β-Sulfoethyl-N-phenylamino, gegebenenfalls durch Sulfo substituiertes Naphthylamino, Alkanoylgruppen mit 2 bis 8 Kohlenstoffatomen, insbesondere 2 bis 4 Kohlenstoffatomen, z.B. Acetyl oder Propionyl, Benzoyl, $C_1-C_4$-Alkoxycarbonyl, welches generell z.B. Methoxycarbonyl oder Ethoxycarbonyl umfasst, $C_1-C_4$-Alkylsulfonyl, wie Methylsulfonyl oder Ethylsulfonyl, Phenyl- oder Naphthylsulfonyl, Trifluormethyl, Nitro, Cyano, Hydroxyl, Halogen, welches generell Fluor, Brom oder insbesondere Chlor umfasst, Carbamoyl, N-$C_1-C_4$-Alkylcarbamoyl, wie N-Methylcarbamoyl oder N-Ethylcarbamoyl, Sulfamoyl, N-$C_1-C_4$-Alkylsulfamoyl wie N-Methylsulfamoyl, N-Ethylsulfamoyl, N-Propylsulfamoyl, N-Isopropylsulfamoyl oder N-Butylsulfamoyl, N-(β-Hydroxyethyl)-sulfamoyl, N,N-Di-(β-hydroxyethyl)-sulfamoyl, N-Phenylsulfamoyl, Ureido, Carboxy, Sulfomethyl, Sulfo oder Sulfato. Die Alkylreste können zudem durch Sauerstoff (-O-) unterbrochen sein.

Beispiele für geeignete Chromophorreste D sind:

(i) 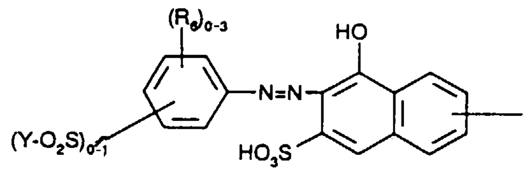 (2a),

worin $(R_6)_{0-3}$ für 0 bis 3 gleiche oder verschiedene Substituenten aus der Gruppe $C_1-C_4$-Alkyl, $C_1-C_4$-Alkoxy, Halogen, Carboxy und Sulfo steht und Y die oben angegebene Bedeutung hat;

(ii) 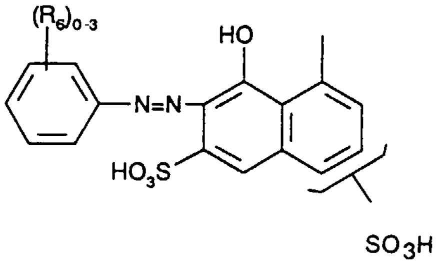 (2b)

worin $(R_6)_{0-3}$ die zuvor angegebene Bedeutung hat;

(iii) 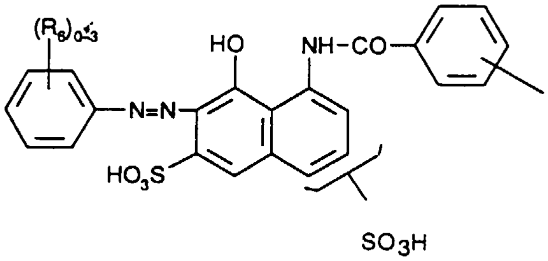 (2c),

worin $(R_6)_{0-3}$ die zuvor angegebene Bedeutung hat,

(iv) 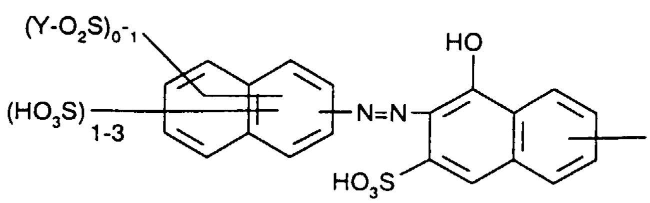 (2d),

worin Y die zuvor angegebene Bedeutung hat;

(v) 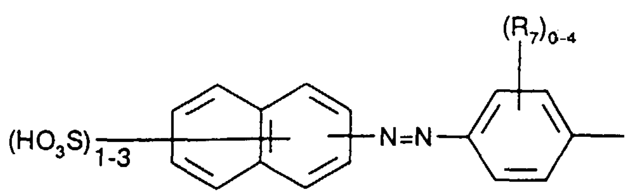 (2e),

worin $(R_7)_{0-4}$ für 0 bis 4 gleiche oder verschiedene Substituenten aus der Gruppe Halogen, Nitro, Cyan, Trifluormethyl, Sulfamoyl, Carbamoyl, $C_1$-$C_4$-Alkyl, $C_1$-$C_4$-Alkoxy, Amino, Acetylamino, Ureido, Hydroxy, Carboxy, Sulfomethyl und Sulfo steht;

(vi) 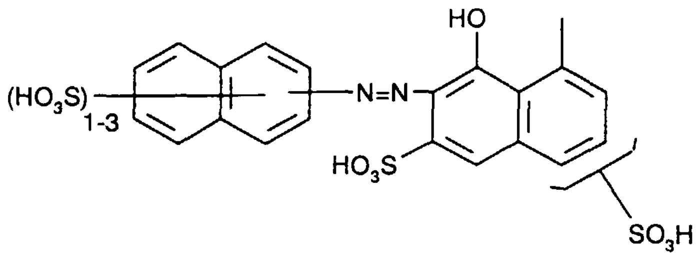 (2f);

(vii) 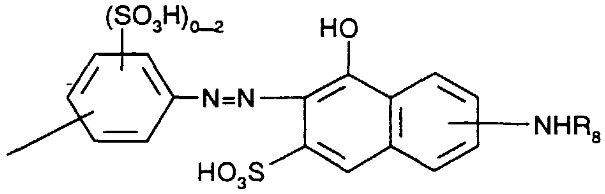 (2g),

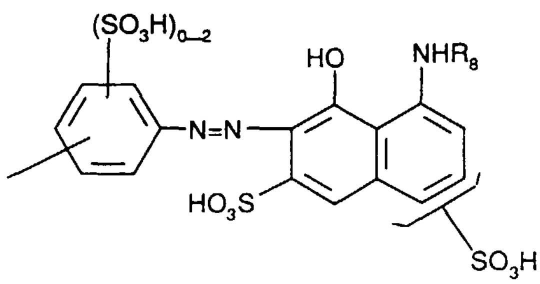 (2h)

oder

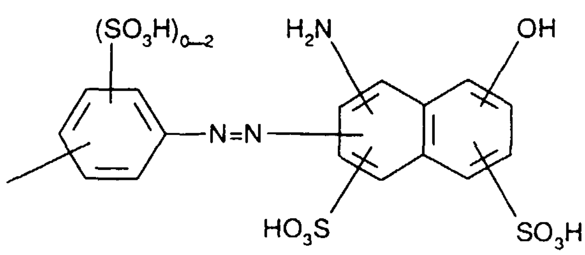 (2h'),

worin $R_8$ $C_1$-$C_4$-Alkanoyl, Benzoyl oder ein nicht-reaktiver Triazinylrest der Formel

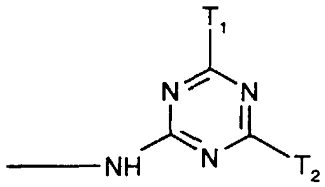

(3)

ist, und worin $T_1$ und $T_2$ unabhängig voneinander je für Hydroxy, $C_1$-$C_4$-Alkoxy, $C_1$-$C_4$-Alkylthio Morpholino oder gegebenenfalls durch nicht-reaktive Reste substituiertes Amino stehen; Beispiele für nicht-reaktive Reste $T_1$ oder $T_2$ sind hierbei Amino; N-$C_1$-$C_4$-Alkylamino oder N,N-Di-$C_1$-$C_4$-Alkylamino, wobei das Alkyl jeweils z.B. durch Sulfo, Sulfato, Hydroxy, Carboxy oder Phenyl substituiert sein kann; Cyclohexylamino; Phenylamino oder Naphthylamino, wobei das Phenyl oder Naphthyl jeweils z.B. durch $C_1$-$C_4$-Alkyl, $C_1$-$C_4$-Alkoxy, Amino, $C_2$-$C_4$-Alkanoylamino, Carboxy, Sulfo oder Halogen substituiert sein kann; oder N-$C_1$-$C_4$-Alkyl-N-phenylamino, wobei das Alkyl und Phenyl gegebenenfalls wie zuvor geschildert substituiert sein kann; und insbesondere Amino, Methylamino, Ethylamino, β-Hydroxyethylamino, N,N-Di-β-Hydroxyethylamino, β-Sulfoethylamino, Cyclohexylamino, o-, m- oder p-Methylphenylamino, o-, m- oder p-Methoxyphenylamino, o-, m- oder p-Sulfophenylamino, 2,4- oder 2,5-Disulfophenylamino, 2- oder 3-Sulfo-4-methoxyphenylamino, 2- oder 3-Sulfo-4-methylphenylamino, 4-Methyl-2,5-disulfophenylamino, o-Carboxyphenylamino, 1- oder 2-Naphthylamino, 1-Sulfo-2-naphthylamino, 1,5-Disulfo-2-naphthylamino, 6,8-Disulfo-2-naphthylamino, 4,8-Disulfo-2-naphthylamino, 4,6,8-Trisulfo-2-naphthylamino, 1,5,7-Trisulfo-2-naphthylamino, 3,6,8-Trisulfo-2-naphthylamino, 1,6-Disulfo-2-naphthylamino, N-Ethyl-N-phenylamino, N-Methyl-N-phenylamino, N-β-sulfoethyl-N-phenylamino, oder β-Hydroxyethyl-N-phenylamino;

(viii)

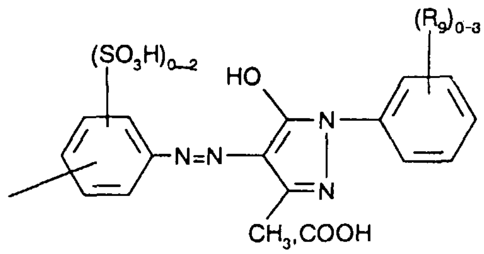

(2i) ,

oder

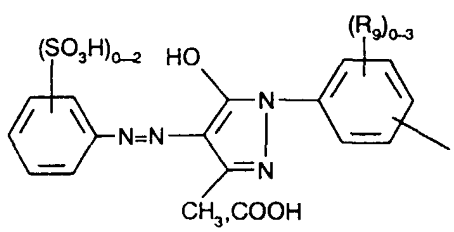

(2j),

worin $(R_9)_{0-3}$ für 0 bis 3 gleiche oder verschiedene Substituenten aus der Gruppe $C_1$-$C_4$-Alkyl, $C_1$-$C_4$-Alkoxy, Halogen, Carboxy und Sulfo steht;

(ix) 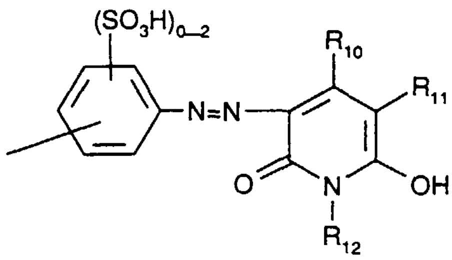 (2k),

worin $R_{10}$ und $R_{12}$ unabhängig voneinander Wasserstoff, $C_1$-$C_4$-Alkyl oder Phenyl und $R_{11}$ Wasserstoff, Cyano, Carbamoyl oder Sulfomethyl ist;

(x) 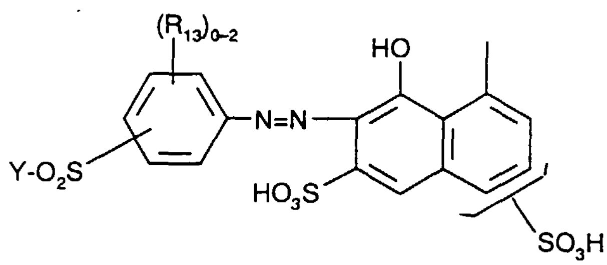 (2l),

worin $(R_{13})_{0-2}$ für 0 bis 2 gleiche oder verschiedene Substituenten aus der Gruppe $C_1$-$C_4$-Alkyl, $C_1$-$C_4$-Alkoxy, Halogen, Carboxy und Sulfo steht; und Y die oben angegebene Bedeutung hat;

(xi) 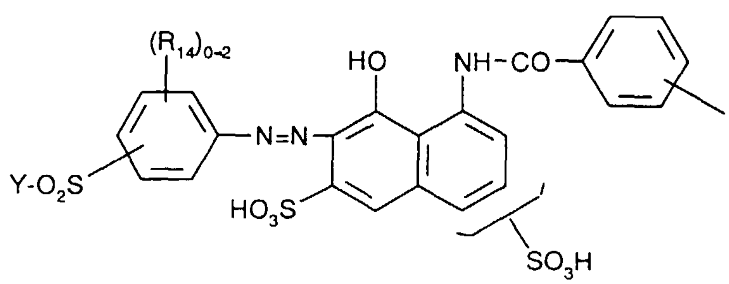 (2m),

worin $(R_{14})_{0-2}$ für 0 bis 2 gleiche oder verschiedene Substituenten aus der Gruppe $C_1$-$C_4$-Alkyl, $C_1$-$C_4$-Alkoxy, Halogen, Carboxy und Sulfo steht; und Y die oben angegebene Bedeutung hat;

(xii) 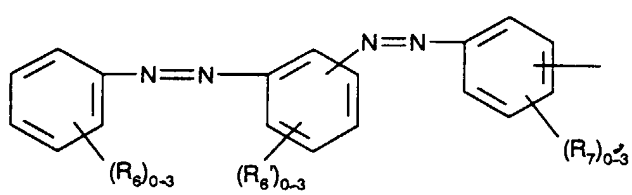 (2n)

oder

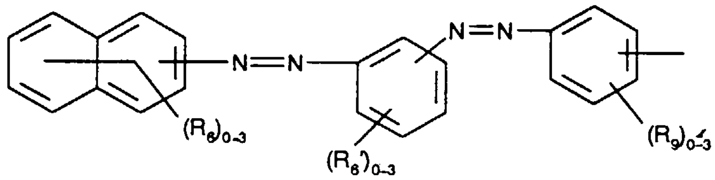

(2o)

oder

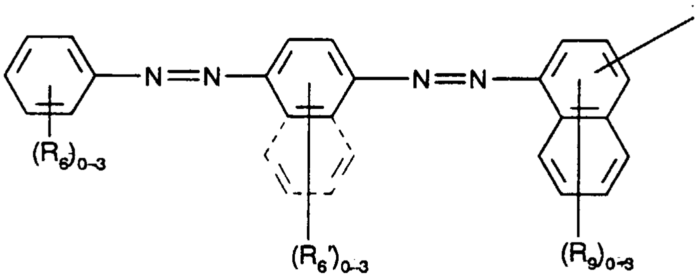

(2p)

oder

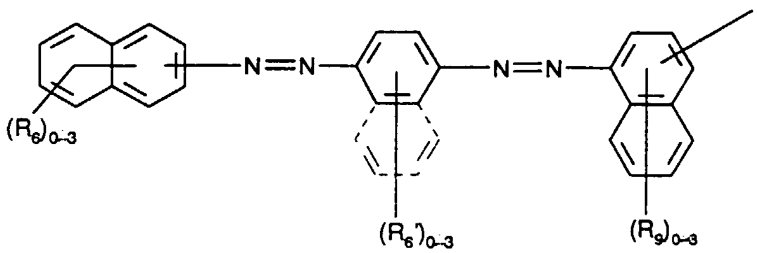

(2q)

oder

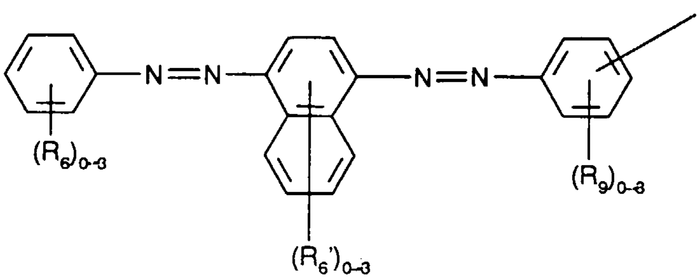

(2r)

worin $(R_6)_{0-3}$, $(R_7)_{0-3}$ und $(R_9)_{0-3}$ jeweils die oben angegebene Bedeutung haben und $(R_6')_{0-3}$ für 0 bis 3 gleiche oder verschiedene Substituenten aus der Gruppe $C_1$-$C_4$-Alkyl, unsubstituiertes oder durch Hydroxy, Sulfato oder $C_1$-$C_2$-Alkoxy substituiertes $C_1$-$C_4$-Alkoxy, Halogen, Carboxy oder Sulfo steht;

(xiii) 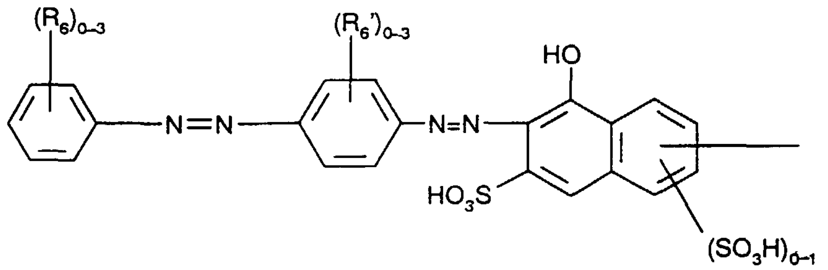 (2s),

worin $(R_6)_{0-3}$ und $(R_6')_{0-3}$ jeweils die zuvor angegebene Bedeutung haben;

(xiv) 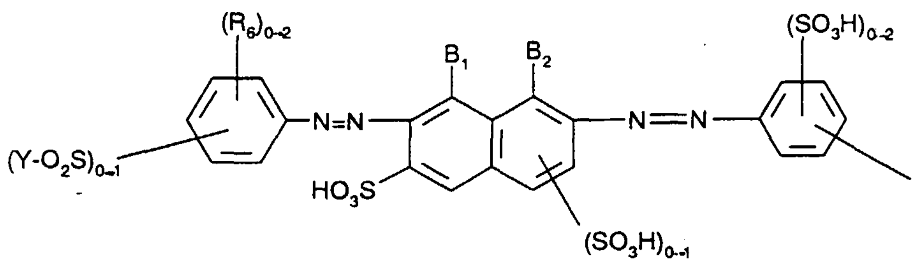 (2t)

oder

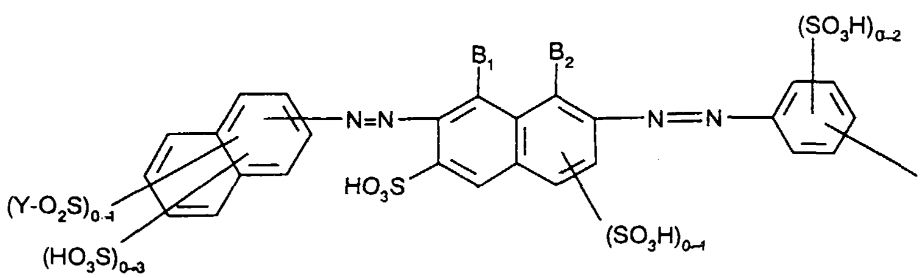 (2t'),

worin $(R_6)_{0-2}$ für 0 bis 2 gleiche oder verschiedene Substituenten aus der Gruppe $C_1$-$C_4$-Alkyl, $C_1$-$C_4$-Alkoxy, Halogen, Carboxy und Sulfo steht, eine der Variablen $B_1$ und $B_2$ Hydroxy und die andere Amino bedeutet und Y die zuvor angegebene Bedeutung hat;

(xv) 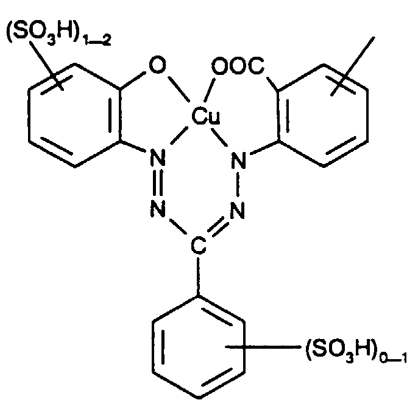 oder 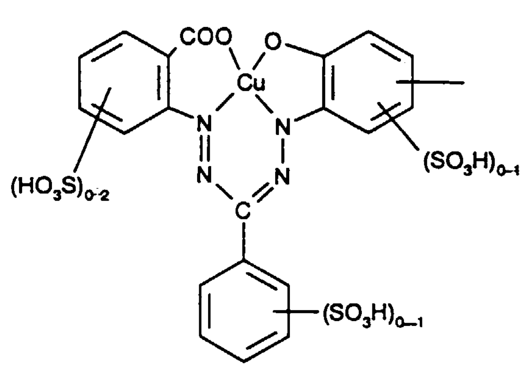

(2u) (2v),

worin die Benzolkerne keine weiteren Substituenten enthalten oder durch $C_1$-$C_4$-Alkyl, $C_1$-$C_4$-Alkoxy, $C_1$-$C_4$-Alkylsulfonyl, Halogen oder Carboxy weitersubstituiert sind;

(xvi) 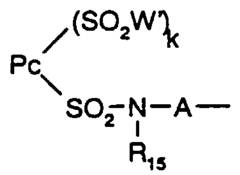 (2w)

worin Pc der Rest eines Metallphthalocyanins, insbesondere der Rest eines Kupfer- oder Nickelphthalocyanins; W' -OH und/oder -$NR_{16}R_{16}'$; $R_{16}$ und $R_{16}'$ unabhängig voneinander Wasserstoff oder gegebenenfalls durch Hydroxy oder Sulfo substituiertes $C_1$-$C_4$-Alkyl; $R_{15}$ Wasserstoff oder $C_1$-$C_4$-Alkyl; A ein gegebenenfalls durch $C_1$-$C_4$-Alkyl, Halogen, Carboxy oder Sulfo substituierter Phenylenrest oder ein $C_2$-$C_6$-Alkylenrest; und k 1 bis 3 sind;

(xvii) 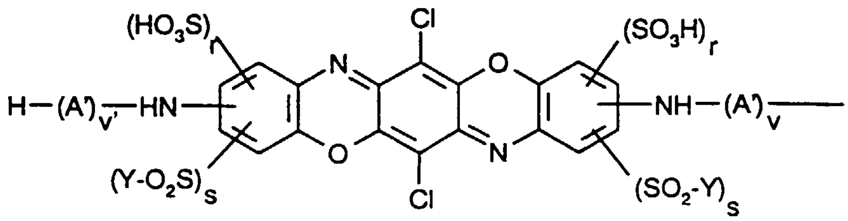 (2x)

worin A' ein gegebenenfalls durch $C_1$-$C_4$-Alkyl, Halogen, Carboxy oder Sulfo substituierter Phenylenrest oder ein $C_2$-$C_6$-Alkylenrest ist, r, s, v und v' unabhängig voneinander je die Zahl 0 oder 1 bedeuten und Y die zuvor angegebene Bedeutung hat; und

(xviii) 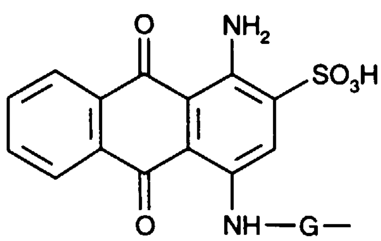 (2y)

worin G einen unsubstituierten oder durch $C_1$-$C_4$-Alkyl, $C_1$-$C_4$-Alkoxy, Halogen, Carboxy oder Sulfo substituierten Phenylenrest oder einen Cyclohexylen-, Phenylenmethylen- oder $C_2$-$C_6$-Alkylenrest bedeutet.

D steht insbesondere bevorzugt für einen Rest der zuvor angegebenen Formel (2a), (2e), (2h), (2h'), (2k), (2s) oder (2v).

Eine bevorzugte Ausführungsform der vorliegenden Erfindung betrifft Verbindungen der Formel

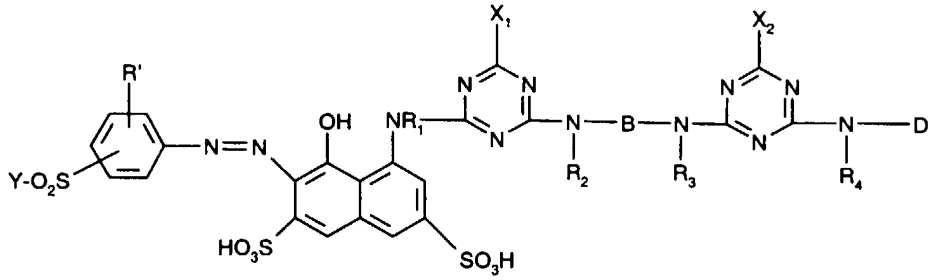 (1a),

worin R' Wasserstoff, Methyl, Methoxy, Chlor oder Sulfo ist, Y für Vinyl oder β-Sulfatoethyl steht, $R_1$, $R_2$, $R_3$ und $R_4$ unabhängig voneinander je Wasserstoff oder $C_1$-$C_4$-Alkyl bedeuten, einer der Reste $X_1$ und $X_2$ Chlor und der andere Fluor sind, B 1,2-Propylen, 1,3-Propylen, 1,4-Butylen, 2-Methyl-1,5-pentylen oder 1,6-Hexylen bedeutet und D ein Rest der zuvor angegebenen Formel (2a), (2e), (2h), (2h'), (2k), (2s) oder (2v) ist.

Eine besonders bevorzugte Ausführungsform der vorliegenden Erfindung betrifft Verbindungen der zuvor angegebenen Formel (1a), worin R' Wasserstoff oder Sulfo ist, Y für Vinyl oder β-Sulfatoethyl steht, $R_1$, $R_2$, $R_3$ und $R_4$ je Wasserstoff sind, $X_1$ Chlor und $X_2$ Fluor bedeuten, B 1,2-Propylen, 1,3-Propylen, 1,4-Butylen, 2-Methyl-1,5-pentylen oder 1,6-Hexylen ist und D einen Rest der Formel

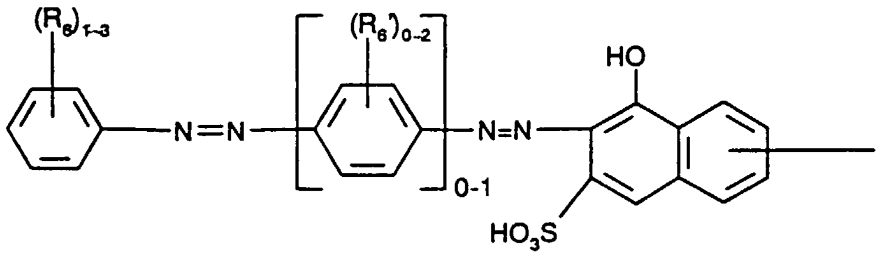

(2s'),

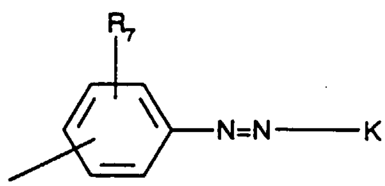

(2e')

oder

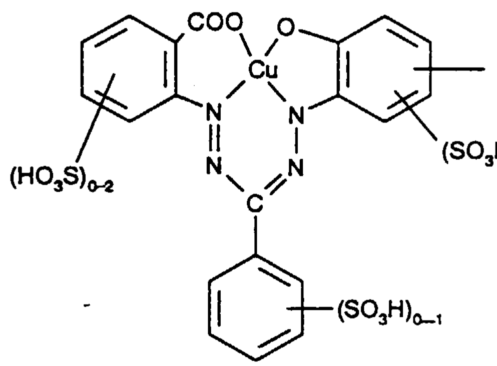

(2v)

bedeutet, worin $(R_6)_{1-3}$ 1 bis 3 gleiche oder verschiedene Reste aus der Gruppe Methyl, Methoxy und Sulfo bedeutet, $(R_6')_{0-2}$ für 0 bis 2 gleiche oder verschiedene Reste aus der Gruppe Sulfo, Methyl und Methoxy steht, $R_7$ Methyl, Methoxy, Acetylamino, Ureido oder Sulfo bedeutet und K ein durch Sulfo, Amino, Hydroxy, Benzoylamino oder durch einen Rest der Formel

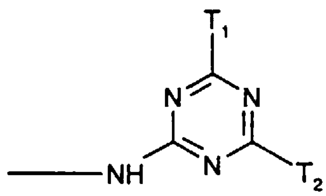

(3),

worin $T_1$ und $T_2$ unabhängig voneinander je für Morpholino, Amino, Methylamino, Ethylamino, β-Hydroxyethylamino, N,N-Di-β-Hydroxyethylamino, β-Sulfoethylamino, Cyclohexylamino, o-, m- oder p-Methylphenylamino, o-, m- oder p-Methoxyphenylamino, o-, m- oder p-Sulfophenylamino, 2,4- oder 2,5-Disulfophenylamino, 2- oder 3-Sulfo-4-methoxyphenylamino, 2- oder 3-Sulfo-4-methylphenylamino, 4-Methyl-2,5-disulfophenylamino, o-Carboxyphenylamino, 1- oder 2-Naphthylamino, 1-Sulfo-2-naphthylamino, 1,5-Disulfo-2-naphthylamino, 6,8-Disulfo-2-naphthylamino, 4,8-Disulfo-2-naphthylamino, 4,6,8-Trisulfo-2-naphthylamino, 1,5,7-Trisulfo-2-naphthylamino, 3,6,8-Trisulfo-2-naphthylamino, 1,6-Disulfo-2-naphthylamino, N-Ethyl-N-phenylamino, N-Methyl-N-phenylamino, N-β-sulfoethyl-N-phenylamino, oder β-Hydroxyethyl-N-phenylamino stehen, substituierter 1- oder 2-Naphthylrest oder ein Pyridonrest der Formel

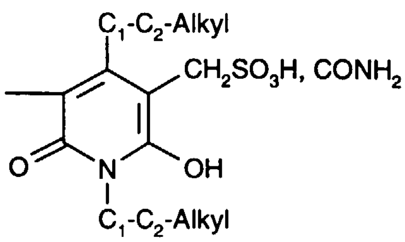

(4)

ist.

Eine ganz besonders bevorzugte Ausführungsform der vorliegenden Erfindung betrifft Verbindungen der Formel

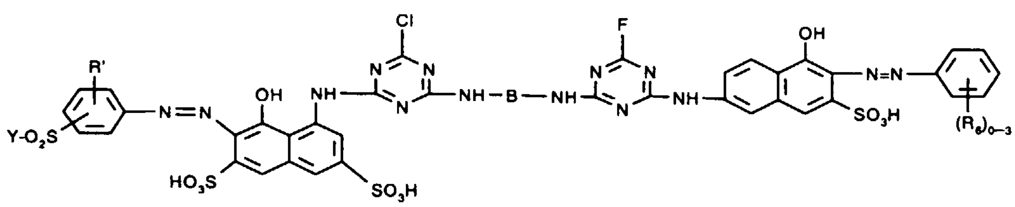

(1b),

worin R' Wasserstoff, Methyl, Methoxy, Chlor oder Sulfo ist, $(R_6)_{0-3}$ für 0 bis 3 gleiche oder verschiedene Substituenten aus der Gruppe $C_1$-$C_4$-Alkyl, $C_1$-$C_4$-Alkoxy, Halogen, Carboxy und Sulfo steht, Y für Vinyl oder β-Sulfatoethyl steht und B 1,2-Propylen, 1,3-Propylen, 1,4-Butylen, 2-Methyl-1,5-pentylen oder 1,6-Hexylen bedeutet. R' ist hierbei bevorzugt Wasserstoff. Als Substituenten R6 kommen insbesondere Methyl, Methoxy und Sulfo, insbesondere Methoxy und Sulfo, in Betracht. Für B kommt bevorzugt 1,2-Propylen, 1,3-Propylen oder 1,4-Butylen, insbesondere Propylen und vorzugsweise 1,2-Propylen, in Betracht.

Gegenstand der vorliegenden Erfindung ist ferner ein Verfahren zur Herstellung der Verbindungen der Formel (1) bzw. (1a), welches dadurch gekennzeichnet ist, dass man je in etwa 1 Moläquivalent einer Verbindung der Formel

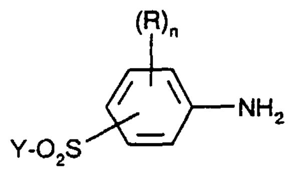

(5),

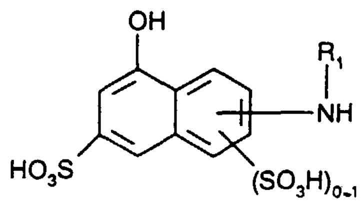

(6),

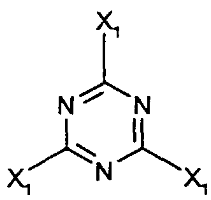

(7),

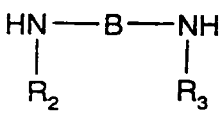

(8),

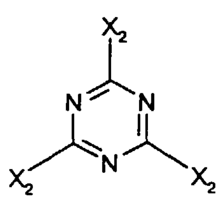

(9)

und

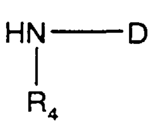

10)

in beliebiger Reihenfolge miteinander umsetzt, wobei B, D, $(R)_n$, $R_1$, $R_2$, $R_3$, $R_4$, $X_1$, $X_2$ und Y jeweils die zuvor angegebene Bedeutung haben.

Die Diazotierung der Verbindung der Formel (5) und ihre Kupplung mit der Verbindung der Formel (6) bzw. einem Umsetzungsprodukt der Verbindungen der Formeln (6), (7) und gegebenenfalls (8), (9) und (10) erfolgt in üblicher Weise, z.B. indem man die Verbindung der Formel (5) in mineralsaurer Lösung, z.B. salzsaurer Lösung mit einem Nitrit, z.B. Natriumnitrit, bei niedriger Temperatur, z.B. bei 0 bis 5°C, diazotiert und anschliessend bei einem neutralen

bis leicht sauren pH-Wert, z.B. bei pH 3 bis 7 und bevorzugt 5 bis 6,5, und niedrigen Temperaturen, z.B. 0 bis 30°C, mit der entsprechenden Kupplungskomponente kuppelt.

Die Kondensationsreaktionen zwischen den Verbindungen der Formeln (6), (7), (8), (9) und (10) erfolgen im allgemeinen analog zu bekannten Verfahren, in der Regel in wässriger Lösung bei Temperaturen von z.B. 0 bis 50°C und einem pH-Wert von z.B. 4 bis 10. Bedeutet D z.B. den Rest eines Monoazo- oder Polyazochromophors, kann anstelle der Verbindung der Formel (10) auch ein Vorprodukt, z.B. eine Diazokomponente oder Kupplungskomponente, in das Verfahren eingesetzt werden und der Rest D erst im weiteren Verlauf des Verfahrens durch eine entsprechende Diazotierungs- und Kupplungsreaktion fertiggestellt werden. Die wichtigsten Verfahrensvarianten sind in den Beispielen beschrieben.

Die Verbindungen der Formeln (5), (6), (7), (8), (9) und (10) sind bekannt oder können in Analogie zu bekannten Verbindungen hergestellt werden.

Die erfindungsgemässen Farbstoffe sind faserreaktiv. Unter faserreaktiven Verbindungen sind solche zu verstehen, die mit den Hydroxylgruppen der Cellulose, den Amino-, Carboxy-, Hydroxy- oder Thiolgruppen bei Wolle und Seide, oder mit den Amino- und gegebenenfalls mit den Carboxygruppen von synthetischen Polyamiden unter Bildung kovalenter chemischer Bindungen zu reagieren vermögen.

Die erfindungsgemässen Farbstoffe eignen sich zum Färben und Bedrucken der verschiedensten Materialien, wie hydroxylgruppenhaltigen oder stickstoffhaltigen Fasermaterialien. Als Beispiele seien Seide, Leder, Wolle, Polyamidfasern und Polyurethane, und insbesondere cellulosehaltige Fasermaterialien aller Art genannt. Solche cellulosehaltige Fasermaterialien sind beispielsweise die natürlichen Cellulosefasern, wie Baumwolle, Leinen und Hanf, sowie Zellstoff und regenerierte Cellulose. Die erfindungsgemässen Farbstoffe sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern. Besonders geeignet sind die erfindungsgemässen Farbstoffe zum Färben oder Bedrucken von cellulosehaltigen Fasermaterialien. Weiterhin können sie zum Färben oder Bedrucken von natürlichen oder synthetischen Polyamidfasermaterialien verwendet werden.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung oder durch mehrstündiges Lagern bei Raumtemperatur fixiert werden. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die erfindungsgemässen Farbstoffe zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die erfindungsgemässen Farbstoffe eignen sich auch besonders zum Druck, vor allem auf Baumwolle, ebenso aber auch zum Bedrucken von stickstoffhaltigen Fasern, z. B. von Wolle oder Seide oder von Mischgeweben, die Wolle oder Seide enthalten.

Die mit den erfindungsgemässen Farbstoffen hergestellten Färbungen und Drucke besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Beispiel 1: Herstellung der Verbindung der Formel

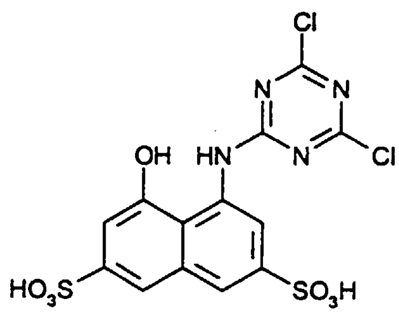

19 Teile Cyanurchlorid und 5 Teile Dinatriumhydrogenphosphat werden in 50 Teilen Eis/Wasser unter Zusatz eines Netzmittels bei einer Temperatur von 0°C 15 Minuten lang kräftig durchmischt. Dazu tropft man eine neutrale Lösung von 32 Teilen 1-Amino-8-naphthol-3,6-disulfosäure in 300 Teilen Wasser so, dass die Reaktionsmischung den pH-Wert von 3 nicht überschreitet. Nach beendeter Zugabe wird mit Natriumhydroxid-Lösung noch zwei Stunden bei pH 3 und 0°C gehalten.

Beispiel 2: Diazotierung von 2-(4-Aminophenylsulfonyl)-ethyl-hydrogensulfat.

28 Teile 2-(4-Aminophenylsulfonyl)-ethyl-hydrogensulfat werden in 300 Teilen Wasser suspendiert und mit gesättigter Natriumcarbonat-Lösung bei pH 6 gelöst, auf 0°C abgekühlt, mit 7 Teilen Natriumnitrit, 50 Teilen Eis und 30 Teilen konz. Salzsäure versetzt und zwei Stunden diazotiert. Danach wird überschüssiges Nitrit mit wenig Sulfaminsäure vernichtet.

Beispiel 3: Herstellung der Verbindung der Formel

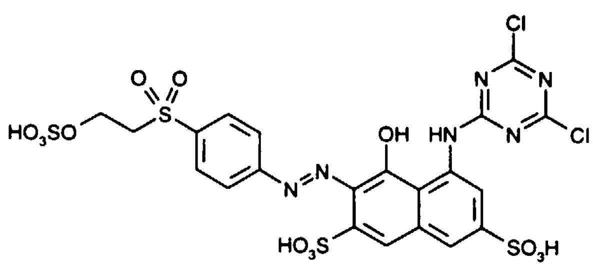

(11)

Die gemäss Beispiel 2 hergestellte Reaktionsmischung wird in ca. 30 Minuten zu der gemäss Beispiel 1 hergestellten Reaktionsmischung gegeben, der pH-Wert innerhalb von drei Stunden mit gesättigter Natriumacetat-Lösung auf 4,5 angehoben und die Temperatur zwischen 0 und 5°C gehalten.

Beispiel 4: Herstellung der Verbindung der Formel

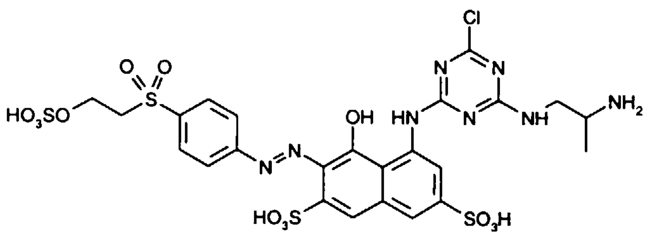

(12)

Zu der gemäss Beispiel 3 hergestellten Reaktionsmischung gibt man eine mit Salzsäure neutralisierte Lösung von 15 Teilen 1,2-Diaminopropan in 150 Teilen Wasser, hält den pH-Wert mit 4N Natronlauge bei 5 und lässt auf Raumtemperatur erwärmen. Nach beendeter Reaktion wird das Reaktionsprodukt durch Zugabe von Kaliumchlorid ausgefällt, abfiltriert, mit gesättigter Kaliumchlorid-Lösung gewaschen und im Vakuum bei 40°C getrocknet.

Beispiel 4a: Verfährt man wie in Beispiel 4 angegeben, verwendet aber anstelle von 15 Teilen 1,2-Diaminopropan 30 Teile 1,3-Diaminopropan, so erhält man eine Verbindung der Formel

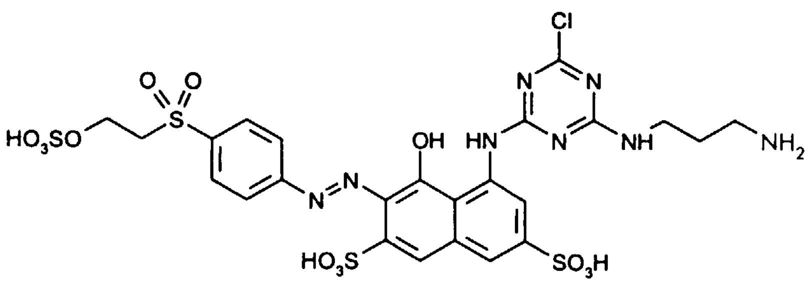

(12b).

Beispiel 4b: Verfährt man wie in Beispiel 4 angegeben, verwendet aber anstelle von 15

Teilen 1,2-Diaminopropan 120 Teile 1,6- Diaminohexan, so erhält man eine Verbindung der Formel

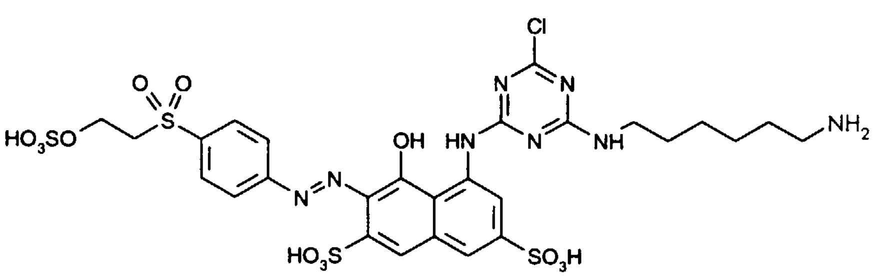

(12c).

Beispiel 5: Zu einer neutralen Lösung von 55 Teilen 3-(4-Amino-2-ureido-phenylazo)-naphthalin-2,5,7-trisulfosäure und 5 Teilen Dinatriumhydrogenphosphat in 500 Teilen Wasser tropft man 14 Teile Cyanurfluorid bei einer Temperatur von 0 bis 2°C. Der pH-Wert wird dabei durch Zugabe von wässriger Natriumhydroxid-Lösung konstant bei 5,5 gehalten. Nach beendeter Reaktion wird zu dieser Reaktionsmischung eine Suspension von 80 Teilen der gemäss Beispiel 4 hergestellten Verbindung der Formel (12) in 400 Teilen Wasser gegeben, der pH-Wert mit Natriumhydroxid-Lösung auf 8,5 angehoben und gehalten und die Temperatur auf Raumtemperatur erhöht. Nach beendeter Kondensation wird die Temperatur auf 30°C erhöht, der pH-Wert auf 11 angehoben und 20 Minuten lang durch Zugabe von Natriumhydroxid-Lösung gehalten. Man senkt den pH-Wert mit konz. Salzsäure auf 7, lässt auf Raumtemperatur abkühlen, entsalzt die Reaktionsmischung durch Umkehrosmose weitgehend und dampft im Vakuum ein. Man erhält den Farbstoff der Formel

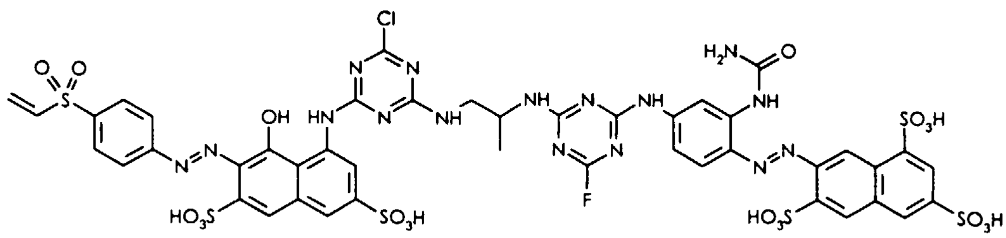

,

der Cellulose in orangefarbenen Tönen mit guten Allgemeinechtheiten färbt.

Beispiel 5a: Verfährt man wie in Beispiel 5 angegeben, verwendet aber anstelle von 80 Teilen der Verbindung der Formel (12) 80 Teile der Verbindung der Formel (12b), so erhält man den Farbstoff der Formel

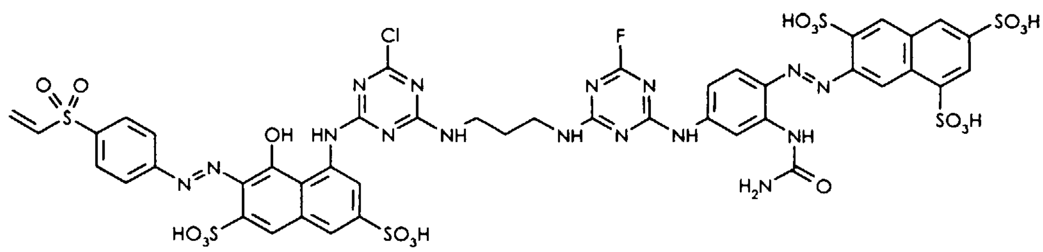

.

Beispiel 5b: Verfährt man wie in Beispiel 5 angegeben, verwendet aber anstelle von 80 Teilen der Verbindung der Formel (12) 84 Teile der Verbindung der Formel (12c), so erhält man den Farbstoff der Formel

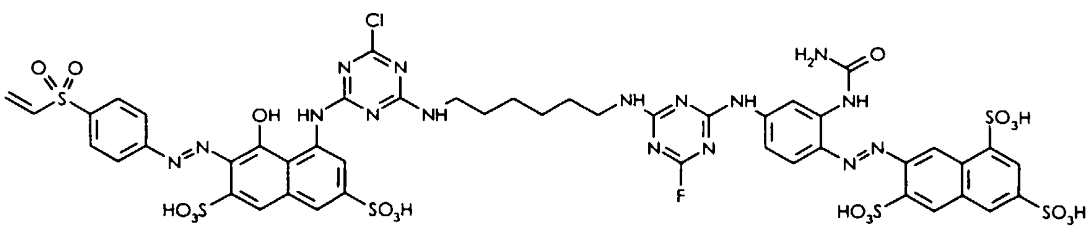

.

Beispiel 6: Verfährt man wie im Beispiel 5 und verwendet anstelle von 3-(4-Amino-2-ureidophenylazo)-naphthalin-2,5,7-trisulfosäure eine äquivalente Menge 4-Amino-2-(5-sulfomethylen-1-ethyl-2-hydroxy-4-methyl-6-oxo-1,6-dihydropryridin-3-ylazo)-benzol-sulfosäure, erhält man den Farbstoff der Formel

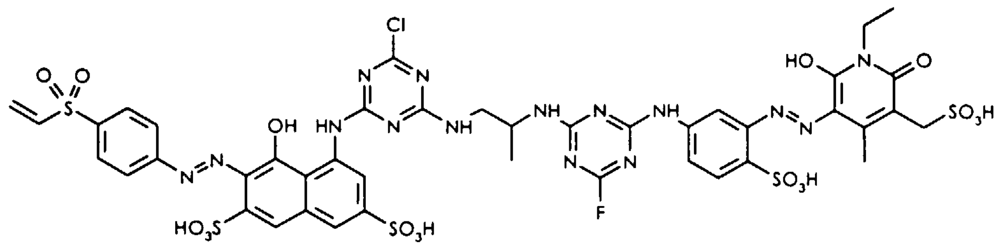

,

der Cellulose in brillant orangefarbenen Tönen mit guten Allgemeinechtheiten färbt.

Beispiel 7: Verfährt man wie im Beispiel 5 beschrieben und verwendet anstelle von 3-(4-Amino-2-ureido-phenylazo)-naphthalin-2,5,7-trisulfosäure eine äquivalente Menge des Kupferkomplexes der 5-Amino-3-[3-phenyl-5-(2-carboxy-5-sulfophenyl)-1-formazano)-4-hydroxy-benzolsulfosäure, erhält man die Verbindung der Formel

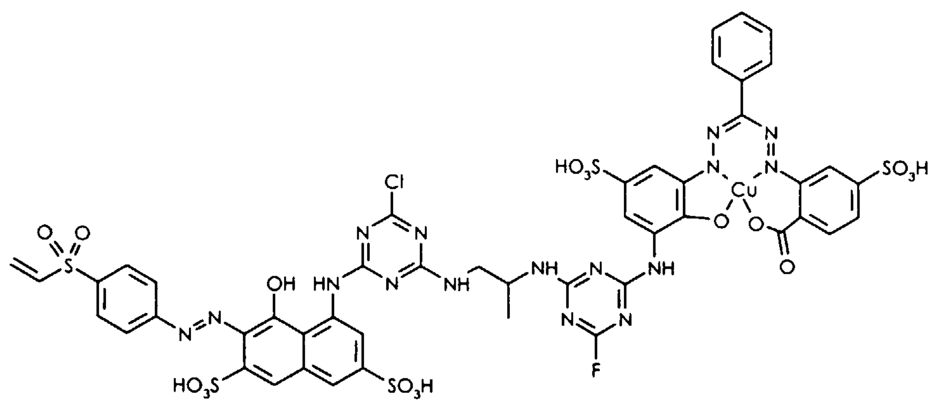

,

welche Cellulose in einer violettfarbenen Nuance mit guten Allgemeinechtheiten färbt.

Beispiel 8: Man suspendiert 50 Teile 7-Amino-4-hydroxy-3-(4-methoxy-2-sulfophenylazo)naphthalin-2-sulfosäure mit 5 Teilen Dinatriumhydrogenphosphat in 750 Teilen Wasser, tropft bei einer Temperatur von 0 bis 2°C 16 Teile Cyanurfluorid zu und hält den pH-Wert mit Hilfe von wässriger Natriumhydroxid-Lösung bei 6. Zu dieser Reaktionsmischung fügt man 80 Teile der gemäss Beispiel 4 hergestellten Verbindung der Formel (12) und hält den pH-Wert während zwei Stunden mit verdünnter Natriumhydroxid-Lösung bei 8,5. Man erwärmt auf eine Innentemperatur von 30°C und erhöht den pH-Wert für 20 Minuten auf 11. Die Reaktionsmischung wird neutralisiert, durch Umkehrosmose weitgehend entsalzt und im Vakuum eingedampft. Man erhält den Farbstoff der Formel:

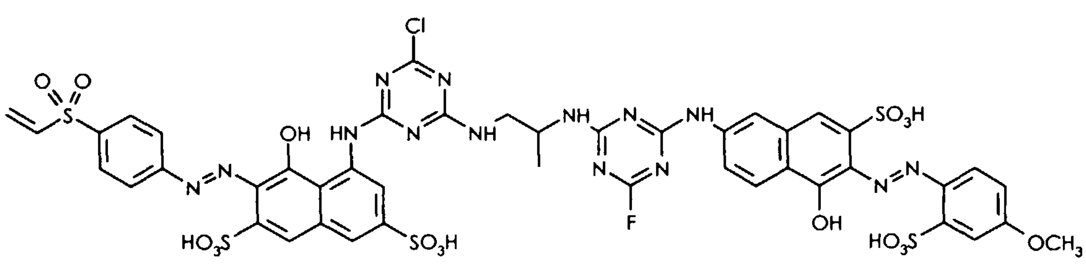

Beispiel 8a: Verfährt man wie in Beispiel 8 angegeben, verwendet aber anstelle von 80 Teilen der Verbindung der Formel (12) 80 Teile der Verbindung der Formel (12b), so erhält man den Farbstoff der Formel

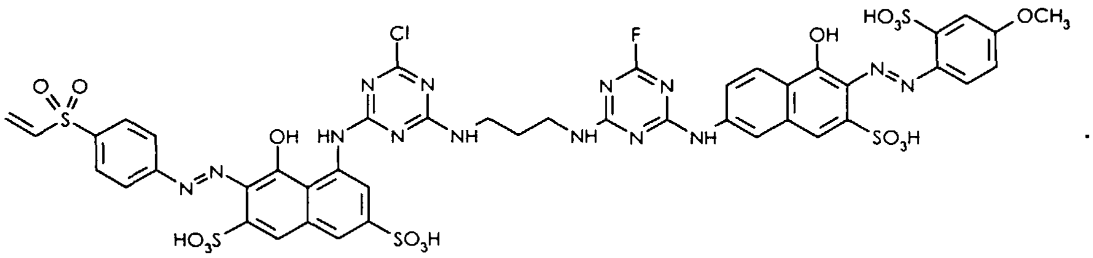

Beispiel 8b: Verfährt man wie in Beispiel 8 angegeben, verwendet aber anstelle von 80 Teilen der Verbindung der Formel (12) 84 Teile der Verbindung der Formel (12c), so erhält man den Farbstoff der Formel

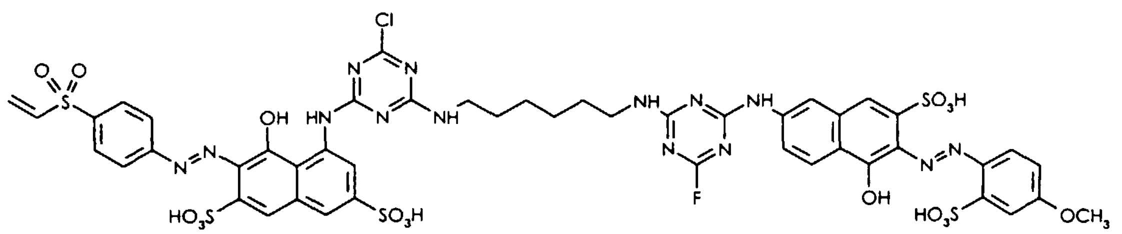

Beispiel 9: Man suspendiert 50 Teile 7-Amino-4-hydroxy-3-(4-methoxy-2-sulfophenylazo)naphthalin-2-sulfosäure mit 5 Teilen Dinatriumhydrogenphosphat in 750 Teilen Wasser, tropft bei einer Temperatur von 0 bis 2°C 16 Teile Cyanurfluorid zu und hält den pH-Wert mit Hilfe von wässriger Natriumhydroxid-Lösung bei 6. Danach fügt man 7,5 Teile 1,2-Diaminopropan, gelöst in 100 Teilen Wasser so zu, dass der pH-Wert von 8,5 nicht überschritten wird und lässt auf Raumtemperatur erwärmen. Für die Dauer der Reaktion wird der pH-Wert mit Natronlauge bei 8 gehalten. Schliesslich wird die gemäss Beispiel 3 hergestellte, die Verbindung der Formel (3) enthaltende Reaktionsmischung zugegeben, auf 25 bis 30°C erwärmt, und zwei Stunden bei pH 8,5 und 20 Minuten bei pH 11 gerührt. Das Reaktionsgemisch wird mit verdünnter Salzsäure neutralisiert, durch Umkehrosmose weitgehend entsalzt und im Vakuum bis zur Trockne eingedampft. Man erhält den Farbstoff der Formel

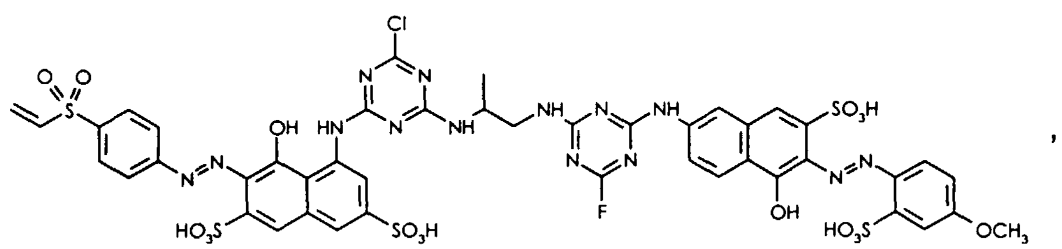

der Cellulose in brillanten roten Tönen mit guten Allgemeinechtheiten färbt.

Beispiel 10: Verfährt man wie im Beispiel 9 angegeben und verwendet anstelle von 7-Amino-4-hydroxy-3-(4-methoxy-2-sulfophenylazo)-naphthalin-2-sulfosäure eine äquivalente Menge 3-(5-Amino-2-sulfophenylazo)-5-benzoylamino-4-hydroxynaphthalin-2,7-disulfosäure, so erhält man den Farbstoff der Formel

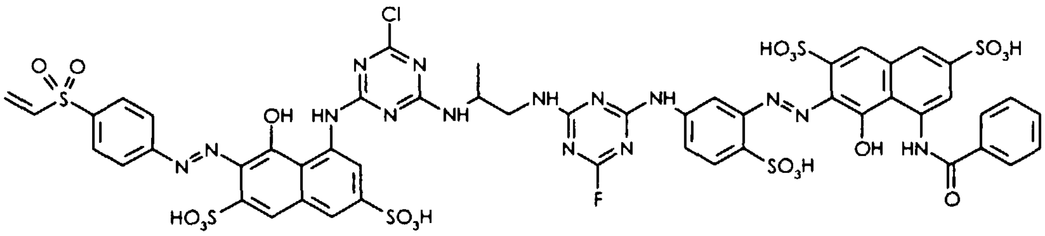

,

der Cellulose in roten Tönen mit guten Allgemeinechtheiten färbt.

Beispiele 11 bis 18: Analog wie in den Beispielen 5 und 9 beschrieben lassen sich die folgenden Verbindungen herstellen, die Baumwolle jeweils mit guten Allgemeinechtheiten färben.

**11**

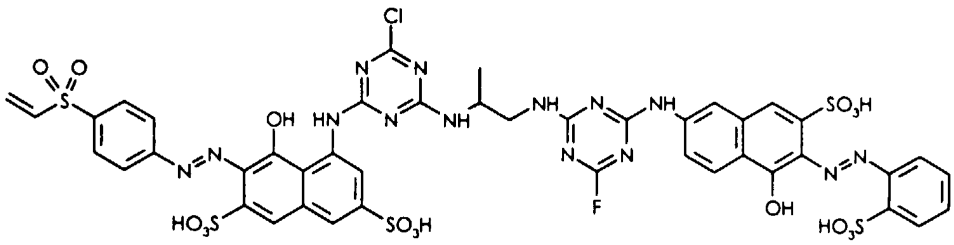

**12**

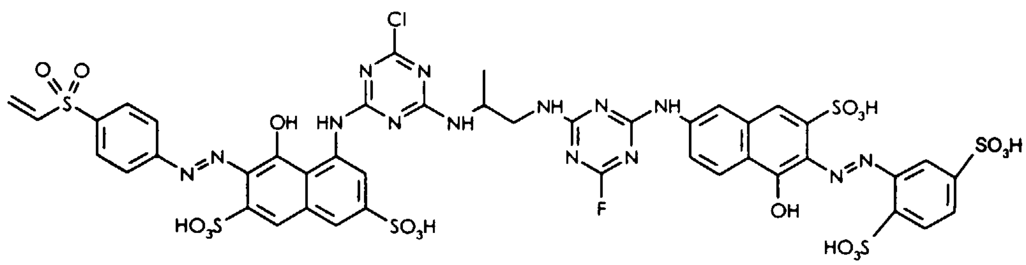

**13**

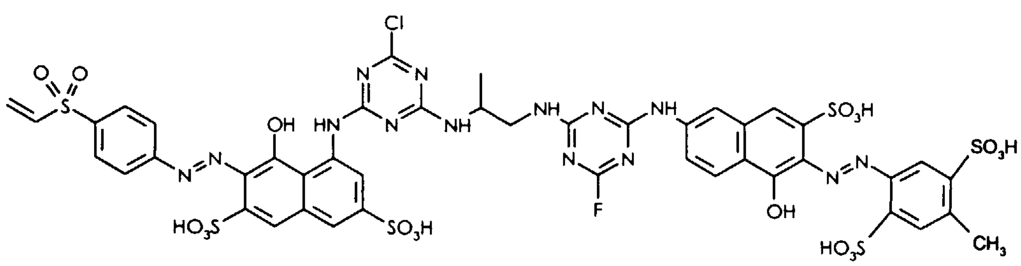

14

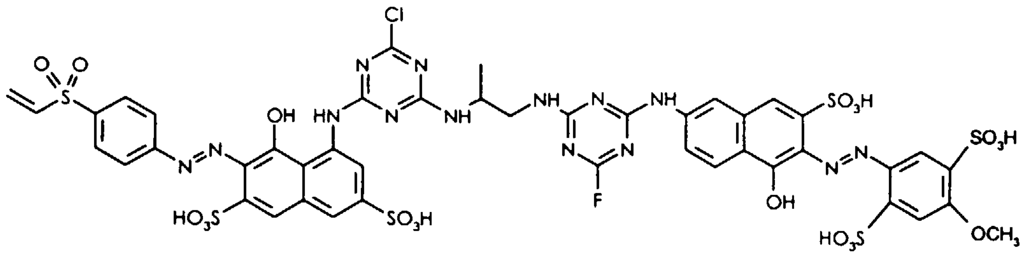

15

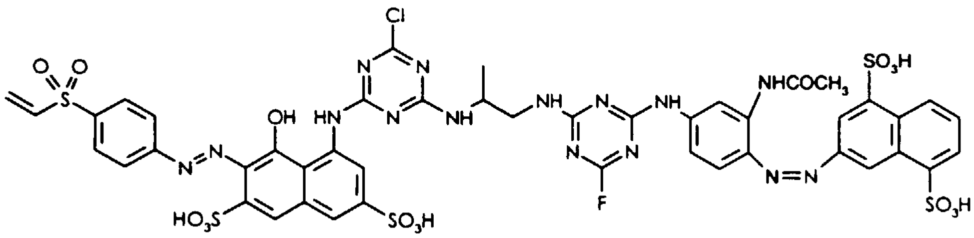

16

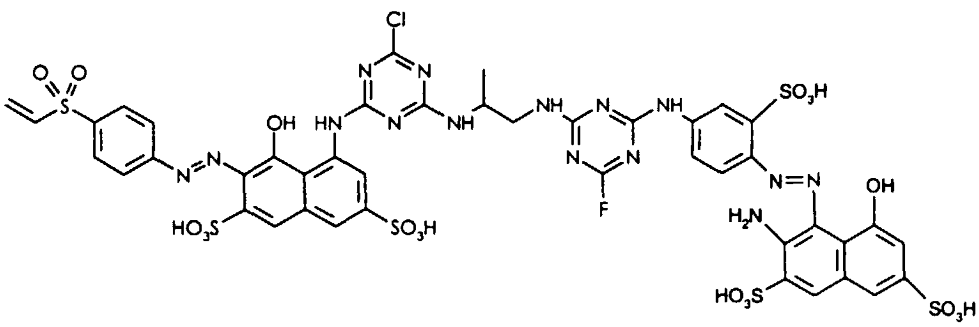

17

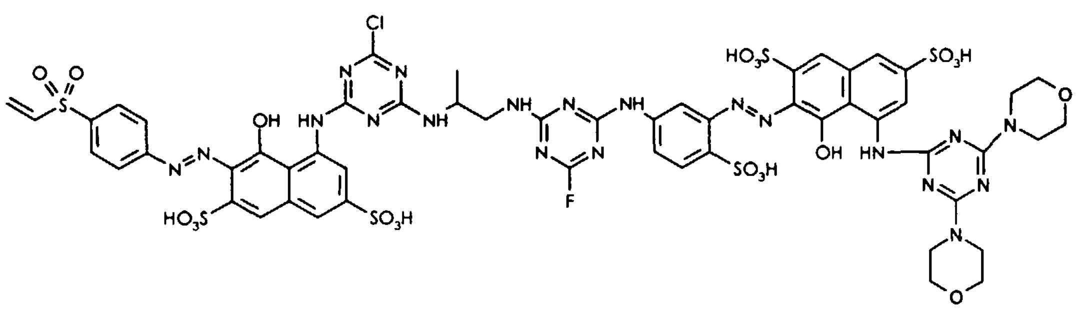

18 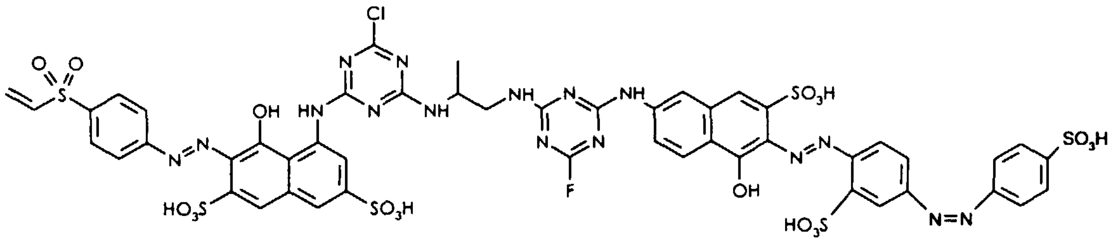

Färbevorschrift I 2 Teile des gemäss Beispiel 5 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen Baumwollgewebe ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

Färbevorschrift II 2 Teile des gemäss Beispiel 9 erhaltenen Reaktivfarbstoffes werden in 400 Teilen Wasser gelöst; dazu gibt man 1500 Teile einer Lösung die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

Färbevorschrift III 8 Teile des gemäss Beispiel 9 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb von 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

Färbevorschrift IV 4 Teile des gemäss Beispiel 5 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70% seines Gewichts zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V 6 Teile des gemäss Beispiel 5 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38°Bé) enthält. Mit der erhaltenen Lösung wird ein Baumwollgewebe foulardiert, so dass es um 70% seines Gewichts zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI 2 Teile des gemäss Beispiel 9 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichts zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75% Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

Färbevorschrift VII 0,1 Teile Farbstoff gemäss Beispiel 5 werden in 200 Teilen entmineralisiertem Wasser gelöst und 0,5 Teile Glaubersalz, 0,1 Teile eines Egalisiermittels sowie 0,5 Teile Natriumacetat zugegeben. Dann wird mit 80%iger Essigsäure auf pH 5,5 eingestellt. Das Färbebad wird 10 Minuten auf 50°C erwärmt und dann 10 Teile eines Wollgewebes zugegeben. Man erwärmt innerhalb von ca. 50 Minuten auf 100°C und färbt 60 Minuten bei dieser Temperatur. Danach lässt man auf 90°C abkühlen und entnimmt das Färbegut. Das Wollgewebe wird mit warmem und kaltem Wasser gespült, anschliessend geschleudert und getrocknet. Es wird eine brillante Färbung erhalten, die sehr gute Licht- und Nassechtheiten aufweist.

Druckvorschrift I 3 Teile des gemäss Beispiel 6 erhaltenen Reaktivfarbstoffes werden unter schnellem Rühren

in 100 Teile einer Stammverdickung, enthaltend 50 Teile 5%ige Natriumalginat verdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

Druckvorschrift II 5 Teile des gemäss Beispiel 6 erhaltenen Reaktivfarbstoffes werden unter schnellem Rühren in 100 Teile einer Stammverdickung, enthaltend 50 Teile 5%ige Natriumalginat verdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

**Patentansprüche**

1. Verbindungen der Formel

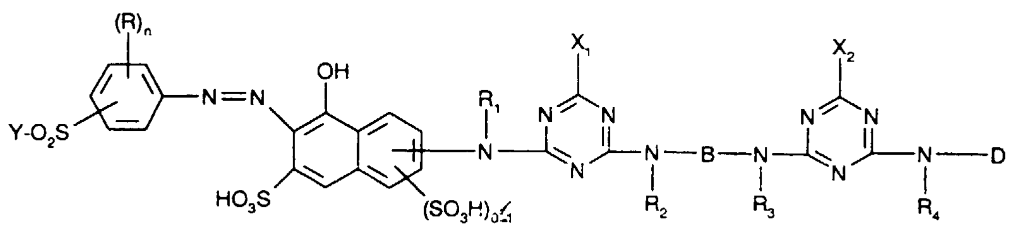

(1),

worin

B 1,2-Propylen, 1,3-Propylen, 2-Hydroxy-1,3-propylen, 1,4-Butylen, 2-Methyl-1,5-pentylen oder 1,6-Hexylen ist,
D den Rest eines Monoazo-, Polyazo-, Metallkomplexazo-, Anthrachinon-, Phthalocyanin-, Formazan- oder Dioxazin-Chromophors bedeutet,
$(R)_n$ für n gleiche oder verschiedene Reste aus der Gruppe $C_1$-$C_4$-Alkyl, $C_1$-$C_4$-Alkoxy, Halogen und Sulfo steht,
n die Zahl 0, 1 oder 2 ist,
$R_1$, $R_2$, $R_3$ und $R_4$ unabhängig voneinander je Wasserstoff oder gegebenenfalls substituiertes $C_1$-$C_4$-Alkyl bedeuten,
einer der Reste $X_1$ und $X_2$ für Chlor und der andere für Fluor steht,
Y Vinyl oder einen Rest $-CH_2-CH_2-U$ bedeutet und
U eine Abgangsgruppe ist.

2. Verbindungen gemäss Anspruch 1, dadurch gekennzeichnet, dass $R_1$, $R_2$, $R_3$ und $R_4$ unabhängig voneinander je für Wasserstoff oder $C_1$-$C_4$-Alkyl stehen.

3. Verbindungen gemäss Anspruch 1 oder 2, dadurch gekennzeichnet, dass $X_1$ Chlor und $X_2$ Fluor bedeuten.

4. Verbindungen gemäss einem der Ansprüche 1 bis 3, dadurch gekennzeichnet, dass B 1,2-Propylen bedeutet.

5. Verbindungen gemäss einem der Ansprüche 1 bis 4, dadurch gekennzeichnet, dass $(R)_n$ 0 oder 1 Rest aus der Gruppe Methyl, Methoxy, Chlor und Sulfo bedeutet und Y Vinyl, β-Chlorethyl, β-Sulfatoethyl, β-Thiosulfatoethyl, β-Acetoxyethyl, β-Phenoxyethyl oder β-Phosphatoethyl ist.

6. Verbindungen gemäss einem der Ansprüche 1 bis 5, dadurch gekennzeichnet, dass D ein Rest der Formel

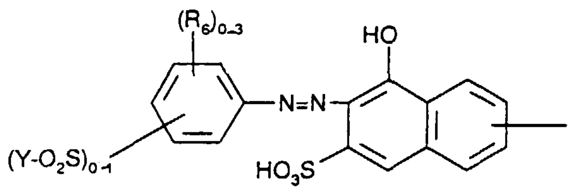

(2a),

worin $(R_6)_{0-3}$ für 0 bis 3 gleiche oder verschiedene Substituenten aus der Gruppe $C_1$-$C_4$-Alkyl, $C_1$-$C_4$-Alkoxy, Halogen, Carboxy und Sulfo steht und Y Vinyl, β-Chlorethyl, β-Sulfatoethyl, β-Thiosulfatoethyl, β-Acetoxyethyl, β-Phenoxyethyl oder β-Phosphatoethyl ist;

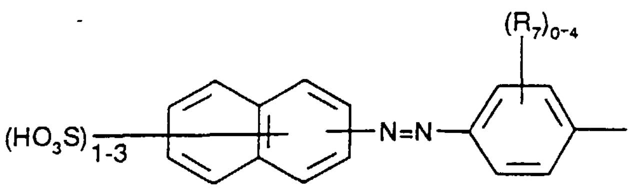

(2e),

worin $(R_7)_{0-4}$ für 0 bis 4 gleiche oder verschiedene Substituenten aus der Gruppe Halogen, Nitro, Cyan, Trifluormethyl, Sulfamoyl, Carbamoyl, $C_1$-$C_4$-Alkyl, $C_1$-$C_4$-Alkoxy, Amino, Acetylamino, Ureido, Hydroxy, Carboxy, Sulfomethyl und Sulfo steht;

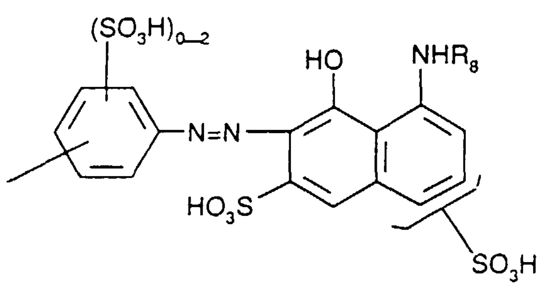

(2h)

oder

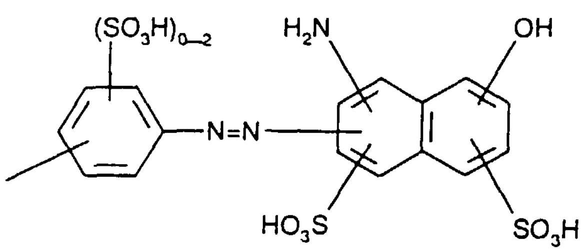

(2h'),

worin $R_8$ $C_1$-$C_4$-Alkanoyl, Benzoyl oder ein nicht-reaktiver Triazinylrest der Formel

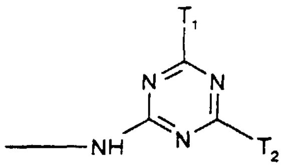

(3)

ist und $T_1$ und $T_2$ unabhängig voneinander je für Hydroxy, $C_1$-$C_4$-Alkoxy, $C_1$-$C_4$-Alkylthio Morpholino oder gegebenenfalls durch nicht-reaktive Reste substituiertes Amino stehen;

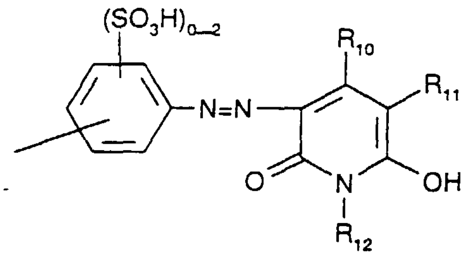

(2k),

worin $R_{10}$ und $R_{12}$ unabhängig voneinander Wasserstoff, $C_1$-$C_4$-Alkyl oder Phenyl und $R_{11}$ Wasserstoff, Cyano, Carbamoyl oder Sulfomethyl sind;

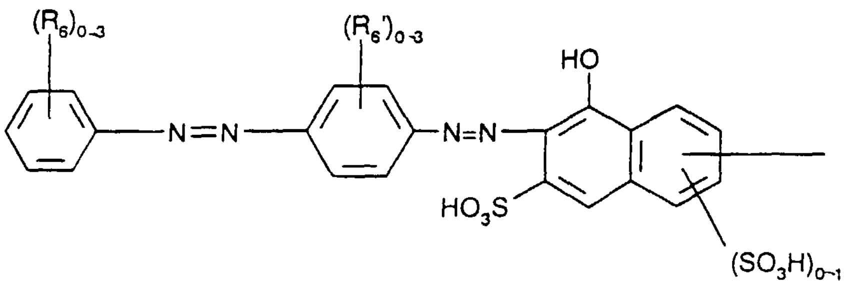

(2s),

worin $(R_6')_{0-3}$ für 0 bis 3 gleiche oder verschiedene Substituenten aus der Gruppe $C_1$-$C_4$-Alkyl, unsubstituiertes oder durch Hydroxy, Sulfato oder $C_1$-$C_2$-Alkoxy substituiertes $C_1$-$C_4$-Alkoxy, Halogen, Carboxy oder Sulfo steht und $(R_6)_{0-3}$ die oben angegebene Bedeutung hat; oder

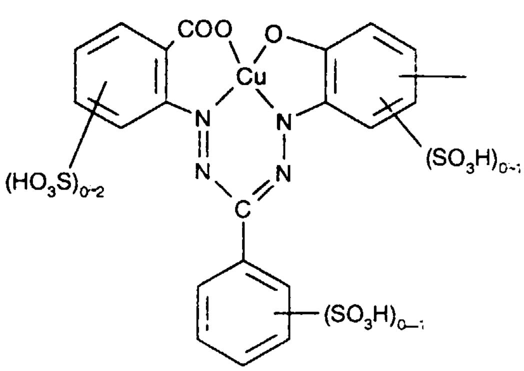

(2v)

ist.

7. Verbindungen gemäss Anspruch 1 der Formel

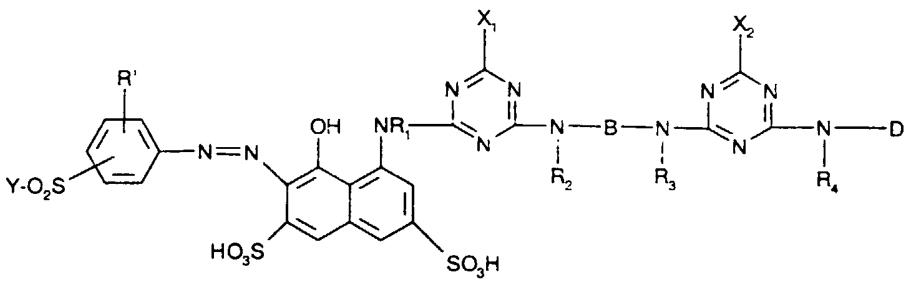

(1a),

worin R' Wasserstoff, Methyl, Methoxy, Chlor oder Sulfo ist, Y für Vinyl oder β-Sulfatoethyl steht, $R_1$, $R_2$, $R_3$ und $R_4$ unabhängig voneinander je Wasserstoff oder $C_1$-$C_4$-Alkyl bedeuten, einer der Reste $X_1$ und $X_2$ Chlor und der andere Fluor sind, B 1,2-Propylen, 1,3-Propylen, 1,4-Butylen, 2-Methyl-1,5-pentylen oder 1,6-Hexylen bedeutet und D ein Rest der im Anspruch 6 angegebenen Formel (2a), (2e), (2h), (2h'), (2k), (2s) oder (2v) ist.

8. Verbindungen gemäss Anspruch 7 der Formel (1a), worin R' Wasserstoff oder Sulfo ist, Y für Vinyl oder β-Sulfatoethyl steht, $R_1$, $R_2$, $R_3$ und $R_4$ je Wasserstoff sind, $X_1$ Chlor und $X_2$ Fluor bedeuten, B 1,2-Propylen, 1,3-Propylen, 1,4-Butylen, 2-Methyl-1,5-pentylen oder 1,6-Hexylen ist und D einen Rest der Formel

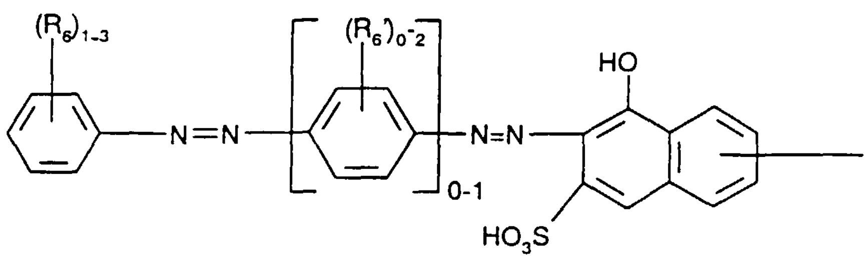

(2s'),

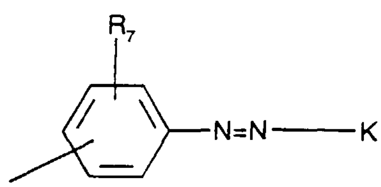

(2e')

oder

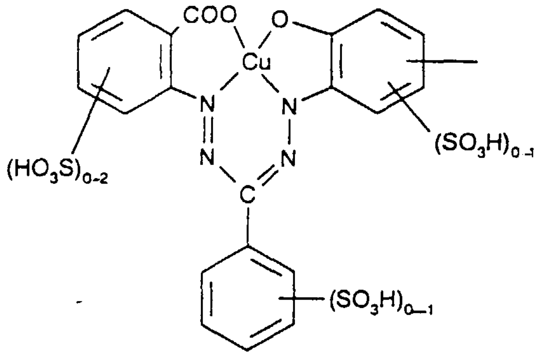

(2v)

bedeutet, worin $(R_6)_{1-3}$ 1 bis 3 gleiche oder verschiedene Reste aus der Gruppe Methyl, Methoxy und Sulfo bedeutet, $(R_6')_{0-2}$ für 0 bis 2 gleiche oder verschiedene Reste aus der Gruppe Sulfo, Methyl und Methoxy steht, $R_7$ Methyl, Methoxy, Acetylamino, Ureido oder Sulfo bedeutet und K ein durch Sulfo, Amino, Hydroxy, Benzoylamino oder durch einen Rest der Formel

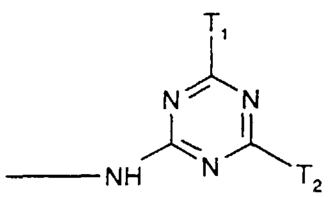

(3),

worin $T_1$ und $T_2$ unabhängig voneinander je für Morpholino, Amino, Methylamino, Ethylamino, β-Hydroxyethylamino, N,N-Di-β-Hydroxyethylamino, β-Sulfoethylamino, Cyclohexylamino, o-, m- oder p-Methylphenylamino, o-, m- oder p-Methoxyphenylamino, o-, m- oder p-Sulfophenylamino, 2,4- oder 2,5-Disulfophenylamino, 2- oder 3-Sulfo-4-methoxyphenylamino, 2- oder 3-Sulfo-4-methylphenylamino, 4-Methyl-2,5-disulfophenylamino, o-Carboxyphenylamino, 1- oder 2-Naphthylamino, 1-Sulfo-2-naphthylamino, 1,5-Disulfo-2-naphthylamino, 6,8-Disulfo-2-naphthylamino, 4,8-Disulfo-2-naphthylamino, 4,6,8-Trisulfo-2-naphthylamino, 1,5,7-Trisulfo-2-naphthylamino, 3,6,8-Trisulfo-2-naphthylamino, 1,6-Disulfo-2-naphthylamino, N-Ethyl-N-phenylamino, N-Methyl-N-phenylamino, N-β-sulfoethyl-N-phenylamino, oder β-Hydroxyethyl-N-phenylamino stehen, substituierter 1- oder 2-Naphthylrest oder ein Pyridonrest der Formel

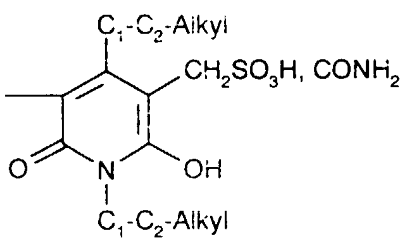

(4)

ist.

**9.** Verbindungen gemäss Anspruch 1 der Formel

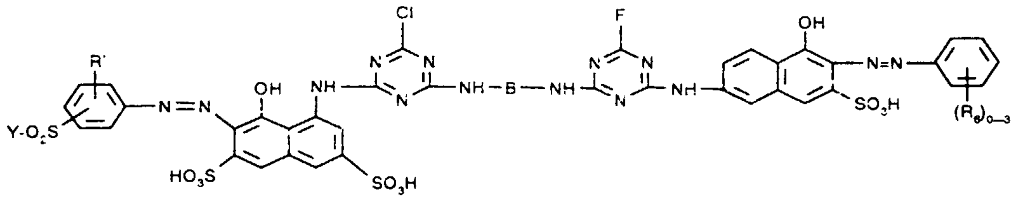 (1b),

worin R' Wasserstoff, Methyl, Methoxy, Chlor oder Sulfo ist, $(R_6)_{0-3}$ für 0 bis 3 gleiche oder verschiedene Substituenten aus der Gruppe $C_1$-$C_4$-Alkyl, $C_1$-$C_4$-Alkoxy, Halogen, Carboxy und Sulfo steht, Y für Vinyl oder β-Sulfatoethyl steht und B 1,2-Propylen, 1,3-Propylen, 1,4-Butylen, 2-Methyl-1,5-pentylen oder 1,6-Hexylen bedeutet.

**10.** Verfahren zur Herstellung von Verbindungen der Formel (1) gemäss Anspruch 1, dadurch gekennzeichnet, dass man je in etwa 1 Moläquivalent einer Verbindung der Formel

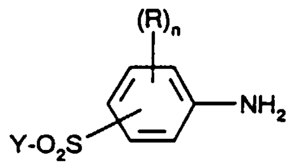 (5),

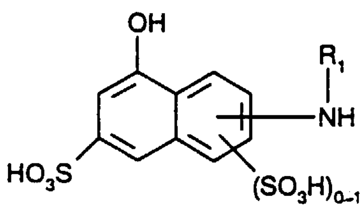 (6),

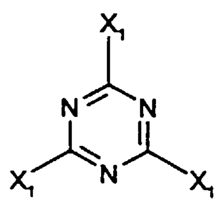 (7),

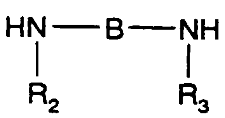 (8),

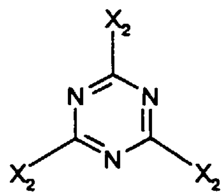

(9)

und

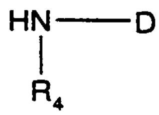

10)

in beliebiger Reihenfolge miteinander umsetzt, wobei B, D, $(R)_n$, $R_1$, $R_2$, $R_3$, $R_4$, $X_1$, $X_2$ und Y jeweils die im Anspruch 1 angegebene Bedeutung haben.

**11.** Verwendung von Verbindungen der Formel (1) gemäss Anspruch 1 zum Färben oder Bedrucken von hydroxylgruppenhaltigen oder stickstoffhaltigen Fasermaterialien.

**12.** Verwendung gemäss Anspruch 11, dadurch gekennzeichnet, dass man cellulosehaltige Fasermaterialien, insbesondere baumwollhaltige Fasermaterialien, färbt oder bedruckt.

**Claims**

**1.** A compound of the formula

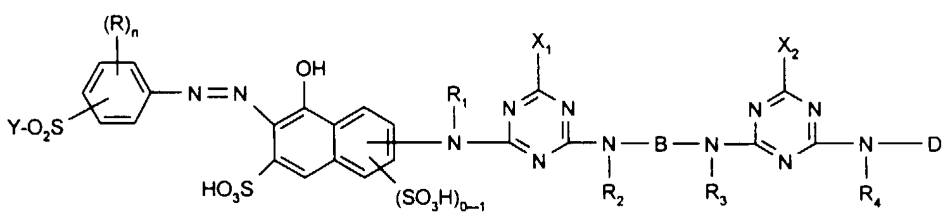

(1),

in which

B is 1,2-propylene, 1,3-propylene, 2-hydroxy1,3-propylene, 1,4-butylene, 2-methyl-1,5-pentylene or 1,6-hexylene,
D is the radical of a monoazo, polyazo, metal complex azo, anthraquinone, phthalocyanine, formazan or dioxazine chromophore,
$(R)_n$ is n identical or different radicals from the group consisting of $C_1$-$C_4$alkyl, $C_1$-$C_4$alkoxy, halogen and sulfo,
n is the number 0, 1 or 2,
$R_1$, $R_2$, $R_3$ and $R_4$ independently of one another are each hydrogen or substituted or unsubstituted $C_1$-$C_4$alkyl,
one of the radicals $X_1$ and $X_2$ is chlorine and the other is fluorine,
Y is vinyl or a radical $-CH_2-CH_2-U$ and
U is a leaving group.

**2.** A compound according to claim 1, in which $R_1$, $R_2$, $R_3$ and $R_4$ independently of one another are each hydrogen or $C_1$-$C_4$alkyl.

**3.** A compound according to claim 1 or 2, in which $X_1$ is chlorine and $X_2$ is fluorine.

**4.** A compound according to any one of claims 1 to 3, in which B is 1,2-propylene.

**5.** A compound according to any one of claims 1 to 4, in which $(R)_n$ is 0 or 1 radical from the group consisting of methyl, methoxy, chlorine and sulfo and Y is vinyl, β-chloroethyl, β-sulfatoethyl, β-thiosulfatoethyl, β-acetoxyethyl, β-phenoxyethyl or β-phosphatoethyl.

**6.** A compound according to any one of claims 1 to 5, in which D is a radical of the formula

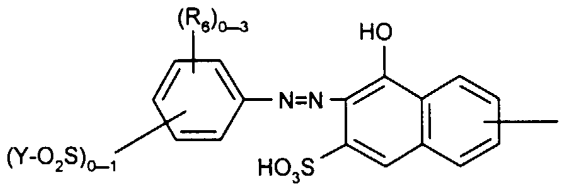

(2a),

in which $(R_6)_{0\text{-}3}$ is 0 to 3 identical or different substituents from the group consisting of $C_1$-$C_4$alkyl, $C_1$-$C_4$alkoxy, halogen, carboxyl and sulfo and Y is vinyl, β-chloroethyl, β-sulfatoethyl, β-thiosulfatoethyl, β-acetoxyethyl, β-phenoxyethyl or β-phosphatoethyl;

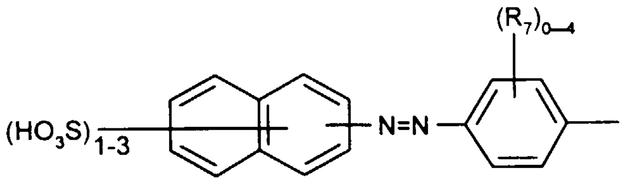

(2e),

in which $(R_7)_{0\text{-}4}$ is 0 to 4 identical or different substituents from the group consisting of halogen, nitro, cyano, trifluoromethyl, sulfamoyl, carbamoyl, $C_1$-$C_4$alkyl, $C_1$-$C_4$alkoxy, amino, acetylamino, ureido, hydroxyl, carboxyl, sulfomethyl and sulfo;

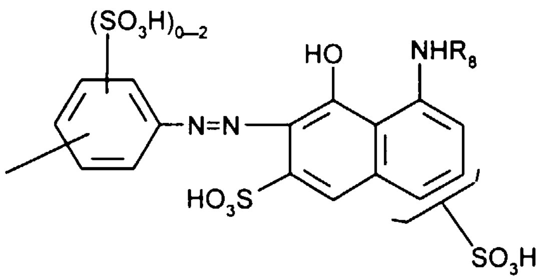

(2h)

or

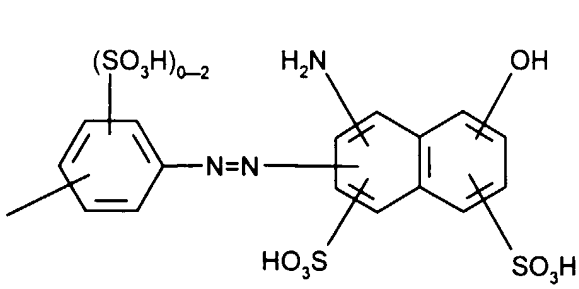

(2h'),

in which $R_8$ is $C_1$-$C_4$alkanoyl, benzoyl or a non-reactive triazinyl radical of the formula

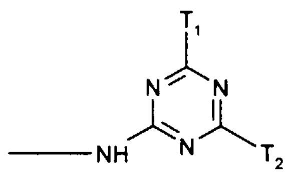

(3)

and $T_1$ and $T_2$ independently of one another are each hydroxyl, $C_1$-$C_4$alkoxy, $C_1$-$C_4$alkylthio, morpholino or amino which is unsubstituted or substituted by non-reactive radicals;

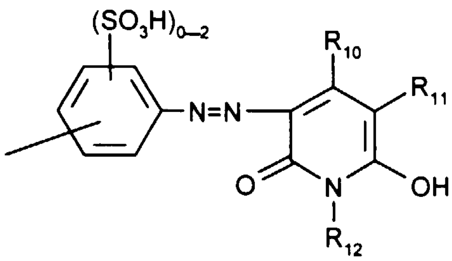

(2k),

in which $R_{10}$ and $R_{12}$ independently of one another are hydrogen, $C_1$-$C_4$alkyl or phenyl and $R_{11}$ is hydrogen, cyano, carbamoyl or sulfomethyl;

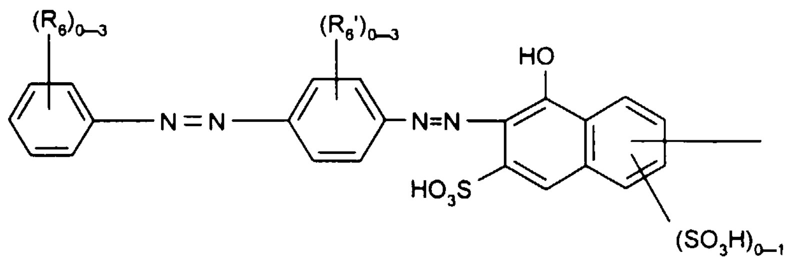

(2s),

in which $(R_6')_{0\text{-}3}$ is 0 to 3 identical or different substituents from the group consisting of $C_1$-$C_4$alkyl, $C_1$-$C_4$alkoxy which is unsubstituted or substituted by hydroxyl, sulfato or $C_1$-$C_2$alkoxy, halogen, carboxyl or sulfo and $(R_6)_{0\text{-}3}$ is as defined above; or

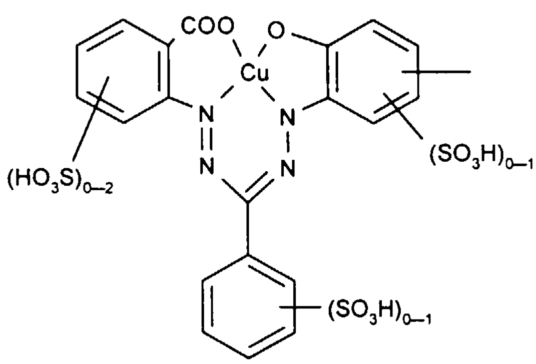

(2v).

**7.** A compound according to claim 1, of the formula

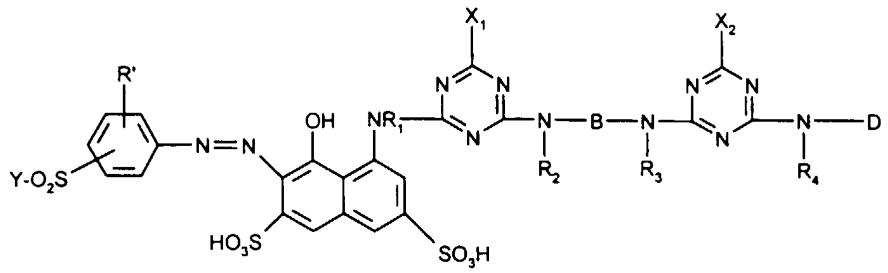

(1a),

in which R' is hydrogen, methyl, methoxy, chlorine or sulfo, Y is vinyl or β-sulfatoethyl, $R_1$, $R_2$, $R_3$ and $R_4$ independently of one another are each hydrogen or $C_1$-$C_4$alkyl, one of the radicals $X_1$ and $X_2$ is chlorine and the other is fluorine, B is 1,2-propylene, 1,3-propylene, 1,4-butylene, 2-methyl-1,5-pentylene or 1,6-hexylene and D is a radical of the formula (2a), (2e), (2h), (2h'), (2k), (2s) or (2v) defined in claim 6.

**8.** A compound according to claim 7 of the formula (1a), in which R' is hydrogen or sulfo, Y is vinyl or β-sulfatoethyl, $R_1$, $R_2$, $R_3$ and $R_4$ are each hydrogen, $X_1$ is chlorine and $X_2$ is fluorine, B is 1,2-propylene, 1,3-propylene, 1,4-butylene, 2-methyl-1,5-pentylene or 1,6-hexylene and D is a radical of the formula

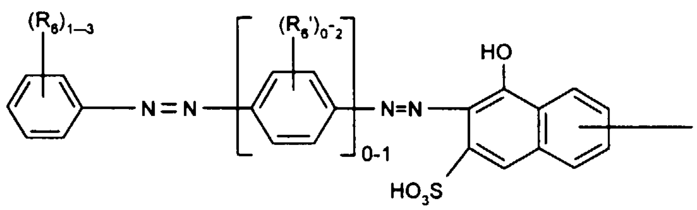

(2s'),

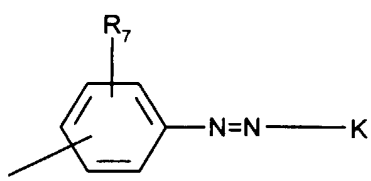

(2e')

or

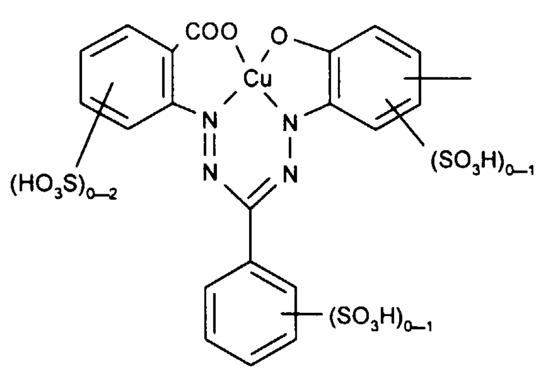

(2v)

in which $(R_6)_{1-3}$ is 1 to 3 identical or different radicals from the group consisting of methyl, methoxy and sulfo, $(R_6')_{0-2}$ is 0 to 2 identical or different radicals from the group consisting of sulfo, methyl and methoxy, $R_7$ is methyl,

methoxy, acetylamino, ureido or sulfo and K is a 1- or 2-naphthyl radical which is substituted by sulfo, amino, hydroxyl, benzoylamino or by a radical of the formula

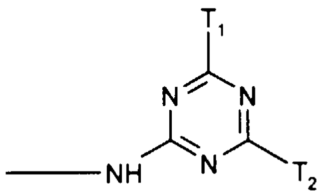

(3),

in which $T_1$ and $T_2$ independently of one another are each morpholino, amino, methylamino, ethylamino, β-hydroxyethylamino, N,N-di-β-hydroxyethylamino, β-sulfoethylamino, cyclohexylamino, o-, m- or p-methylphenylamino, o-, m- or p-methoxyphenylamino, o-, m- or p-sulfophenylamino, 2,4- or 2,5-disulfophenylamino, 2- or 3-sulfo-4-methoxyphenylamino, 2- or 3-sulfo-4-methylphenylamino, 4-methyl-2,5-disulfophenylamino, o-carboxyphenylamino, 1- or 2-naphthylamino, 1-sulfo-2-naphthylamino, 1,5-disulfo-2-naphthylamino, 6,8-disulfo-2-naphthylamino, 4,8-disulfo-2-naphthylamino, 4,6,8-trisulfo-2-naphthylamino, 1,5,7-trisulfo-2-naphthylamino, 3,6,8-trisulfo-2-naphthylamino, 1,6-disulfo-2-naphthylamino, N-ethyl-N-phenylamino, N-methyl-N-phenylamino, N-β-sulfoethyl-N-phenylamino, or β-hydroxyethyl-N-phenylamino, or is a pyridone radical of the formula

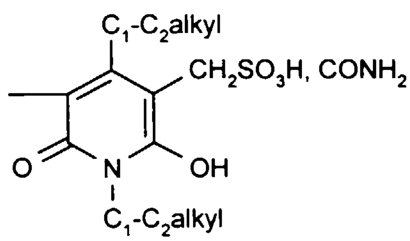

(4).

**9.** A compound according to claim 1, of the formula

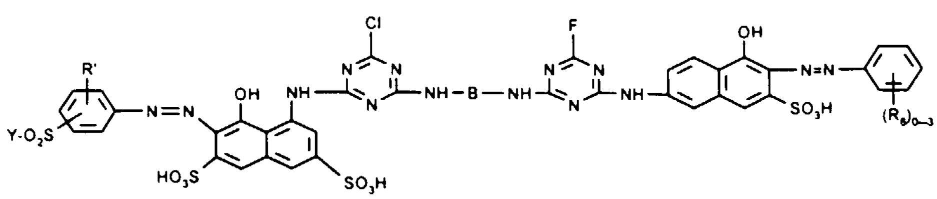

(1b),

in which R' is hydrogen, methyl, methoxy, chlorine or sulfo, $(R_6)_{0-3}$ is 0 to 3 identical or different substituents from the group consisting of $C_1$-$C_4$alkyl, $C_1$-$C_4$alkoxy, halogen, carboxyl and sulfo, Y is vinyl or β-sulfatoethyl and B is 1,2-propylene, 1,3-propylene, 1,4-butylene, 2-methyl-1,5-pentylene or 1,6-hexylene.

**10.** A process for the preparation of a compound of the formula (1) according to claim 1, which comprises reacting in each case about 1 molar equivalent of a compound of the formula

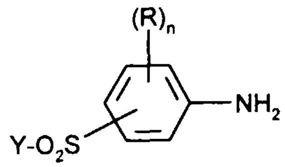

(5),

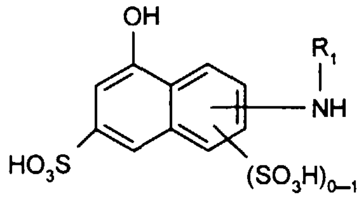

(6),

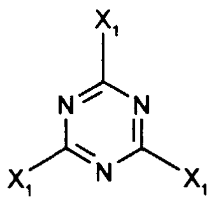

(7),

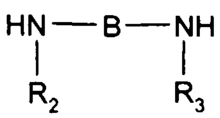

(8),

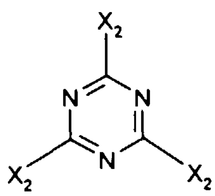

(9)

and

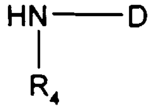

10)

in which B, D, $(R)_n$, $R_1$, $R_2$, $R_3$, $R_4$, $X_1$, $X_2$ and Y are each as defined in claim 1, with one another in any sequence.

**11.** The use of a compound of the formula (1) according to claim 1 for dyeing or printing fibre materials containing hydroxyl groups or containing nitrogen.

**12.** The use according to claim 11, wherein cellulosic fibre materials, in particular fibre materials containing cotton, are dyed or printed.

## Revendications

**1.** Composés de formule

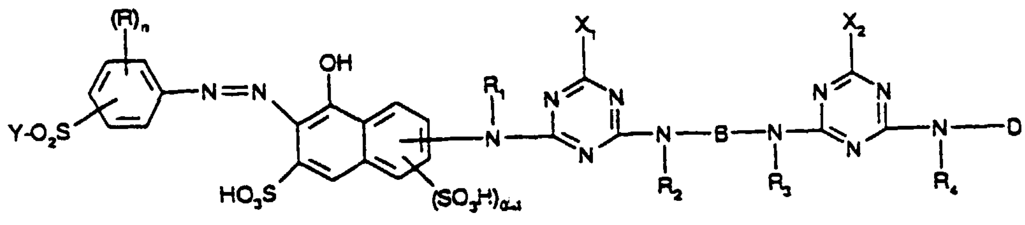

(1),

dans laquelle

| | |
|---|---|
| B | représente des groupes 1,2-propylène, 1,3-propylène, 2-hydroxy-1,3-propylène, 1,4-butylène, 2-méthyl-1,5-pentylène ou 1,6-hexylène, |
| D | représente le reste d'un chromophore monoazoïque, polyazoïque, complexe métallazoïque, d'anthraquinone, de phtalocyanine, de formazane ou de dioxazine, |
| $(R)_n$ | représente des restes identiques ou différents pris dans le groupe comportant des restes alkyle en $C_1$-$C_4$, alkoxy en $C_1$-$C_4$, halogène et sulfo, |
| n | vaut 0, 1 ou 2, |
| $R_1$, $R_2$, $R_3$ et $R_4$ | représentent chacun, indépendamment l'un de l'autre, des atomes d'hydrogène ou des groupes alkyle en $C_1$-$C_4$ éventuellement substitué, |

l'un des restes $X_1$ et $X_2$ représente un atome de chlore et l'autre un atome de fluor,

Y représente un groupe vinyle ou un reste $-CH_2-CH_2-U$ et
U est un groupe partant.

**2.** Composés selon la revendication 1, caractérisés en ce que $R_1$, $R_2$, $R_3$ et $R_4$ représentent chacun, indépendamment les uns des autres, des atomes d'hydrogène ou des groupes alkyle en C1-C4.

**3.** Composés selon la revendication 1 ou 2, caractérisés en ce que $X_1$ représente un atome de chlore et $X_2$ représente un atome de fluor.

**4.** Composés selon l'une des revendications 1 à 3, caractérisés en ce que B représente un groupe 1,2-propylène.

**5.** Composés selon l'une des revendications 1 à 4, caractérisés en ce que $(R)_n$ représente 0 ou 1 reste pris dans le groupe des restes méthyle, méthoxy, chloro et sulfo et Y représente vinyle, β-chloréthyle, β-sulfatoéthyle, β-thiosulfatoéthyle, β-acétoxyéthyle, β-phénoxyéthyle ou β-phosphatoéthyle.

**6.** Composés selon l'une des revendications 1 à 5, caractérisés en ce que D représente un reste de formule

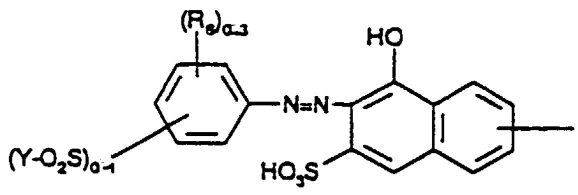

(2a)

dans laquelle $(R_6)_{0-3}$ représente 0 à 3 substituants identiques ou différents pris dans le groupe des substituants

alkyle en $C_1$-$C_4$, alkoxy en $C_1$-$C_4$, halogène, carboxy et sulfo et Y représente des groupes vinyle, β-chloréthyle, β-sulfatoéthyle, β-thiosulfatoéthyle, β-acétoxyéthyle, β-phénoxyéthyle ou β-phosphatoéthyle ;

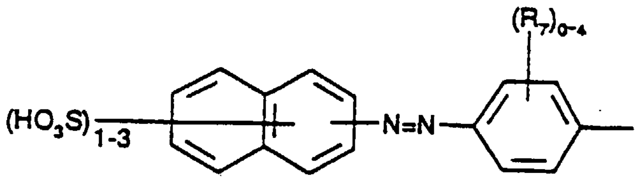

(2e),

dans laquelle $(R_7)_{0-4}$ représente 0 à 4 substituants identiques ou différents pris dans le groupe comportant des atomes d'halogènes, des groupes nitro, cyano, trifluorméthyle, sulfamoyle, carbamoyle, alkyle en $C_1$-$C_4$, alkoxy en $C_1$-$C_4$, amino, acétylamino, uréido, hydroxy, carboxy, sulfométhyle et sulfo ;

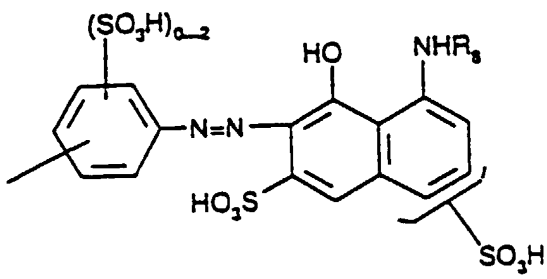

(2h)

ou

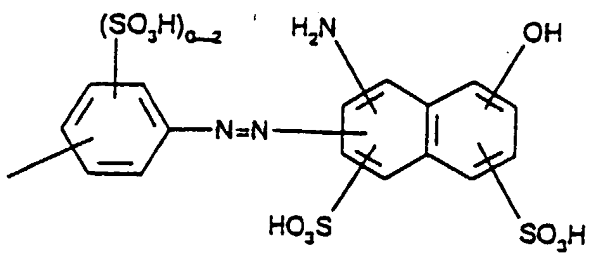

(2h')

où $R_8$ représente des groupes alcanoyle en $C_1$-$C_6$, benzoyle ou un reste triazinyle non réactif de formule

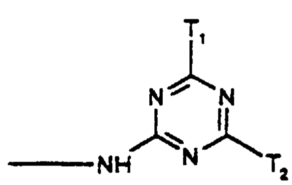

(3)

et $T_1$ et $T_2$ représentent chacun, indépendamment l'un de l'autre, des groupes hydroxy, alkoxy en $C_1$-$C_4$, (alkyl en $C_1$-$C_4$)thio, morpholino ou amino éventuellement substitué par des restes non réactifs ;

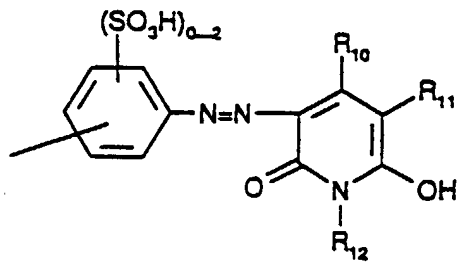

(2k),

où $R_{10}$ et $R_{12}$ représentent chacun, indépendamment l'un de l'autre, des atomes d'hydrogène, des groupes alkyle en $C_1$-$C_4$ ou phényle et $R_{11}$ représente des atomes d'hydrogène, des groupes cyano, carbamoyle ou sulfométhyle ;

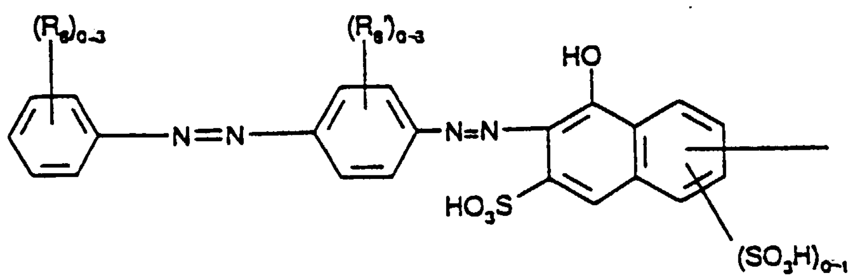

(2s)

où $(R_6')_{0-3}$ représente 0 à 3 substituants identiques ou différents pris dans le groupe des substituants alkyle en $C_1$-$C_4$, alkoxy en $C_1$-$C_4$ non substitué ou substitué par des substituants hydroxy, sulfato ou alkoxy en $C_1$-$C_2$, halogène, carboxy ou sulfo et $(R_6)_{0-3}$ possède la signification donnée ci-dessus ; ou représente

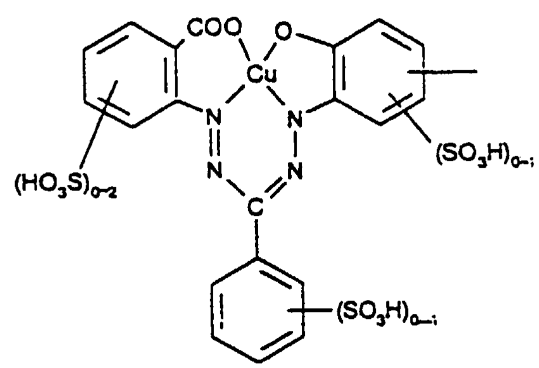

(2v).

**7.** Composés selon la revendication 1 de formule

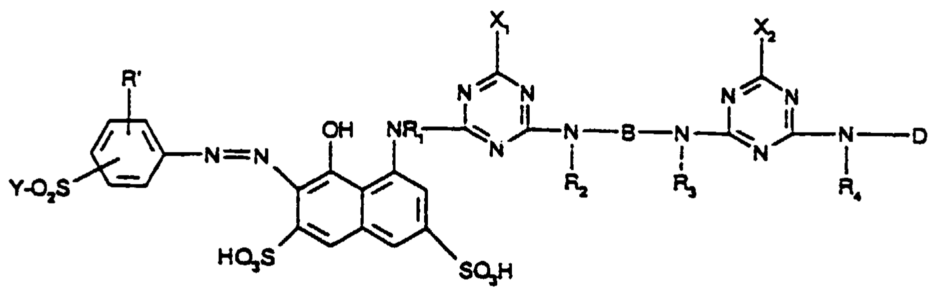 (1a)

où

| | |
|---|---|
| R' | représente un atome d'hydrogène, des groupes méthyle, méthoxy, chloro ou sulfo, |
| Y | représente des groupes vinyle ou β-sulfatoéthyle, |
| $R_1$, $R_2$, $R_3$ et $R_4$ | représentent chacun, indépendamment les uns des autres, des atomes d'hydrogène ou des groupes alkyle en $C_1$-$C_4$, |

l'un des restes $X_1$ et $X_2$ représente un atome de chlore et l'autre un atome de fluor,

B représente des groupes 1,2-propylène, 1,3-propylène, 1,4-butylène, 2-méthyl-1,5-pentylène ou 1,6-hexylène et

D représente un reste de formule (2a), (2e), (2h), (2h'), (2k), (2s) ou (2v) donnée auparavant.

**8.** Composés selon la revendication 7 de formule (Ia) où R' représente un atome d'hydrogène ou un groupe sulfo, Y représente un groupe vinyle ou β-sulfatoéthyle, $R_1$, $R_2$, $R_3$ et $R_4$ représentent chacun un atome d'hydrogène, $X_1$ représente un atome de chlore et $X_2$ représente un atome de fluor, B représente des groupes 1,2-propylène, 1,3-propylène, 1,4-butylène, 2-méthyl-1,5-pentylène ou 1,6-hexylène et D représente un reste de formule

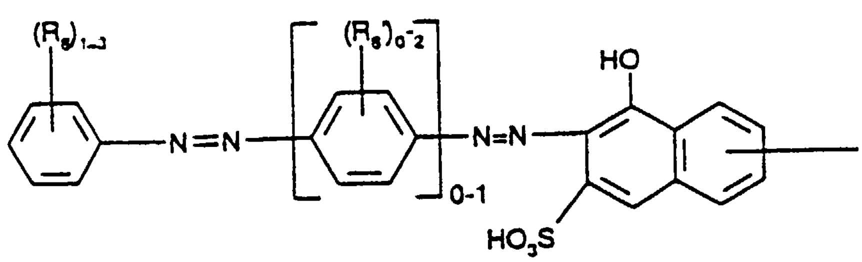 (2s'),

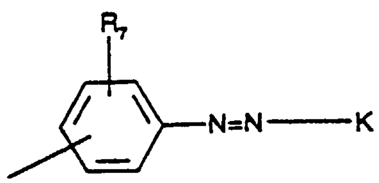 (2e')

ou

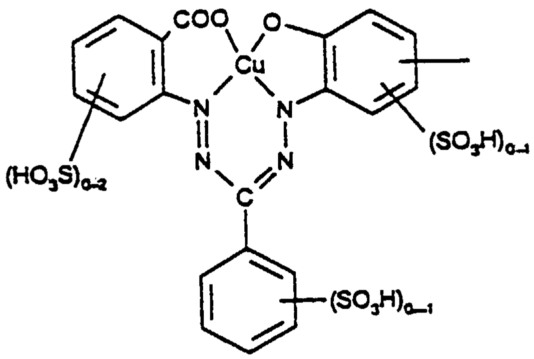

(2v)

où $(R_6)_{1-3}$ représente 1 à 3 restes identiques ou différents pris dans le groupe comportant les restes méthyle, méthoxy et sulfo, $(R_6^{'})_{0-2}$ représente 0 à 2 restes identiques ou différents pris dans le groupe comportant les restes sulfo, méthyle et méthoxy, $R_7$ représente les groupes méthyle, méthoxy, acétylamino, uréido ou sulfo et K représente un reste 1- ou 2-naphtyle substitué par des substituants sulfo, amino, hydroxy, benzoylamino ou un reste de formule

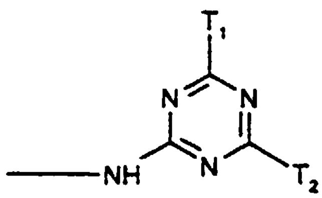

(3),

où $T_1$ et $T_2$ représentent chacun, indépendamment l'un de l'autre, des groupes morpholino, amino, méthylamino, éthylamino, β-hydroxyéthylamino, N,N-di-β-hydroxyéthylamino, β-sulfoéthylamino, cyclohexylamino, o-, m- ou p-méthylphénylamino, o-, m- ou p-méthoxyphénylamino, o-, m- ou p-sulfophénylamino, 2,4- ou 2,5-disulfophénylamino, 2- ou 3-sulfo-4-méthoxyphénylamino, 2- ou 3-sulfo-4-méthylphénylamino, 4-méthyl-2,5-disulfophénylamino, o-carboxyphénylamino, 1- ou 2-naphtylamino, 1-sulfo-2-naphtylamino, 1,5-disulfo-2-naphtylamino, 6,8-disulfo-2-naphtylamino, 4,8-disulfo-2-naphtylamino, 4,6,8-trisulfo-2-naphtylamino, 1,5,7-trisulfo-2-naphtylamino, 3,6,8-trisulfo-2-naphtylamino, 1,6-disulfo-2-naphtylamino, N-éthyl-N-phénylamino, N-méthyl-N-phénylamino, N-β-sulfoéthyl-N-phénylamino ou β-hydroxyéthyl-N-phénylamino, ou représente un reste pyridone de formule

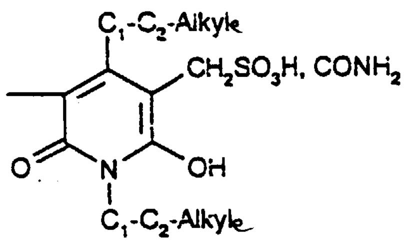

(4).

**9.** Composés selon la revendication 1 de formule

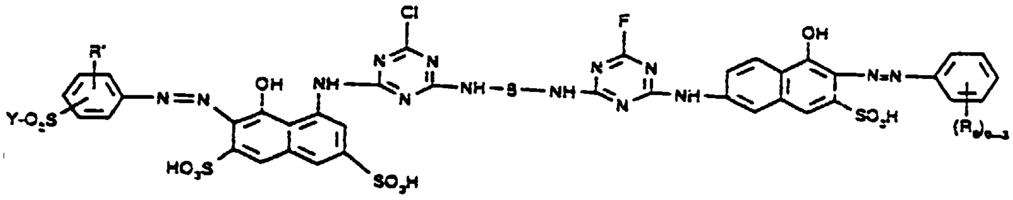 (1b)

où où R' représente un atome d'hydrogène, des groupes méthyle, méthoxy, chloro ou sulfo, $(R_6)_{0-3}$ représente 0 à 3 substituants identiques ou différents pris dans le groupe des substituants alkyle en $C_1$-$C_4$, alkoxy en $C_1$-$C_4$, halogène, carboxy et sulfo, Y représente un groupe vinyle ou β-sulfatoéthyle et B représente des groupes 1,2-propylène, 1,3-propylène, 1,4-butylène, 2-méthyl-1,5-pentylène ou 1,6-hexylène.

**10.** Procédé de préparation de composés de formule (1) selon la revendication 1, caractérisé en ce qu'on fait réagir environ 1 équivalent en moles d'un composé de formule

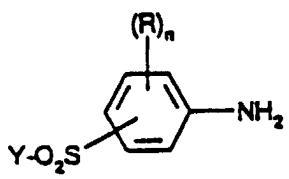 (5)

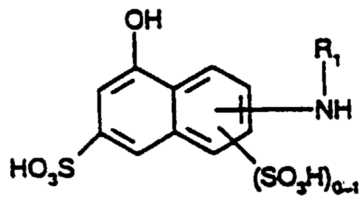 (6)

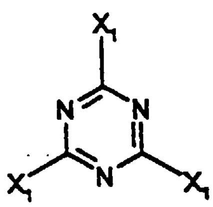 (7)

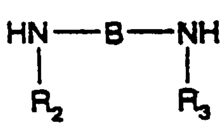 (8)

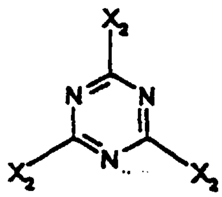

(9)

et

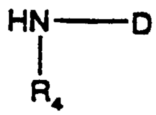

(10)

dans une succession arbitraire, B, D, $(R)_n$, $R_1$, $R_2$, $R_3$, $R_4$, $X_1$, $X_2$ et Y chacun possèdant la signification donnée auparavant.

**11.** Utilisation de composés de formule (1) selon la revendication 1 pour la teinture ou l'impression de matières fibreuses présentant des groupes hydroxyle ou des atomes d'azote.

**12.** Utilisation selon la revendication 11, caractérisée en ce qu'on teint ou on imprime des matières fibreuses cellulosiques, en particulier des matières contenant du coton.